(19)

Europäisches Patentamt
European Patent Office
Office européen des brevets

(11) **EP 4 534 714 A1**

(12) **EUROPEAN PATENT APPLICATION**
published in accordance with Art. 153(4) EPC

(43) Date of publication:
**09.04.2025 Bulletin 2025/15**

(21) Application number: **23811851.7**

(22) Date of filing: **24.05.2023**

(51) International Patent Classification (IPC):
**C22C 38/00** (2006.01)     **B23K 35/30** (2006.01)
**C22C 38/58** (2006.01)

(52) Cooperative Patent Classification (CPC):
**B23K 35/30; C22C 38/00; C22C 38/58**

(86) International application number:
**PCT/JP2023/019346**

(87) International publication number:
**WO 2023/228979 (30.11.2023 Gazette 2023/48)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.05.2022  JP 2022084625**

(71) Applicant: **NIPPON STEEL CORPORATION**
**Chiyoda-ku**
**Tokyo 100-8071 (JP)**

(72) Inventors:
• **YAMADA, Kenta**
  **Tokyo 100-8071 (JP)**
• **OSUKI, Takahiro**
  **Tokyo 100-8071 (JP)**

(74) Representative: **Zimmermann & Partner**
**Patentanwälte mbB**
**Postfach 330 920**
**80069 München (DE)**

(54) **AUSTENITIC STAINLESS ALLOY WELDED JOINT AND AUSTENITIC STAINLESS ALLOY WELDING MATERIAL**

(57)     An austenitic stainless alloy welded joint which includes a weld metal excellent in weld hot cracking resistance, polythionic acid SCC resistance, naphthenic acid corrosion resistance, and age-toughness is provided. A weld metal (20) contains, in mass%, C: 0.020% or less, Si: 0.01 to 1.00%, Mn: 0.20 to 2.00%, P: 0.030% or less, S: 0.010% or less, Cr: 16.0 to 25.0%, Ni: 15.0 to 40.0%, Mo: 2.5 to 5.0%, Nb: 0.10 to 2.00%, N: 0.05 to 0.30%, sol. Al: 0.001 to 0.100%, and B: 0.0010 to 0.0050%, with F1 defined by Formula (1) being 2.30 or less, and F2 defined by Formula (2) being 2.5 or less.

**F1 = 130B** + 8C + 0.025Cr + 0.25Mn + 0.08Mo + 0.6Nb + 12P + 7.6S + 0.78Si + 0.012W (1)     (1)

$$F2 = [Mo]_H / [Mo]_L \quad (2)$$

FIG. 1

**Description**

TECHNICAL FIELD

The present disclosure relates to a welded joint and a welding material, and more particularly relates to an austenitic stainless alloy welded joint and an austenitic stainless alloy welding material.

BACKGROUND ART

An austenitic stainless alloy welded joint is produced by welding an austenitic stainless alloy material. An austenitic stainless alloy welded joint includes a base metal that consists of austenitic stainless alloy, and a weld metal. Austenitic stainless alloy welded joints are used in welded structures of chemical plant facilities such as thermal power boilers, oil refineries, and petrochemical plants. Examples of the welded structures of the chemical plant facilities include peripheral equipment of a distillation column, reheating furnace tubes, reaction tubes, heat exchangers, piping, and the like. Some of the members used in the welded structures of these chemical plant facilities are used in environments which are high-temperature environments of 600 to 700°C and which contain a corrosive fluid containing sulfides and/or chlorides. In the present description, an environment which is a high-temperature environment of 600 to 700°C and which contains a corrosive fluid containing sulfides and/or chlorides is referred to as a "high-temperature corrosive environment".

The operation of a welded structure used in a high-temperature corrosive environment is stopped during a periodic inspection of the relevant chemical plant. When operation is stopped, the temperature of the welded structure falls to normal temperature. At such time, air, moisture, and sulfide scale react to form polythionic acid on the surface of the welded structure. The polythionic acid induces stress-corrosion cracking (hereinafter, referred to as "polythionic acid SCC") at grain boundaries. Therefore, in a welded joint used in the aforementioned high-temperature corrosive environments, the weld metal, in particular, is required to have excellent polythionic acid SCC resistance.

Further, in a case where crude oil of inferior quality is used in a chemical plant facility, not only polythionic acid SCC corrosion but also naphthenic acid corrosion may occur. Naphthenic acids are cyclic saturated hydrocarbons that have one or more carboxyl groups. Naphthenic acids do not cause SCC as in polythionic acids, but instead cause general corrosion. Accordingly, it is preferable for the weld metal of a welded joint used in the aforementioned plant facilities to be excellent not only in polythionic acid SCC resistance but also in naphthenic acid corrosion resistance.

In addition, in a welded joint that has been used for a long time in a high-temperature environment, in some cases the toughness may decrease. Therefore, the weld metal of a welded joint to be used for a long time in a high-temperature environment is required to have excellent age-toughness.

Furthermore, in the weld metal of a welded joint which is required to have polythionic acid SCC resistance, naphthenic acid corrosion resistance, and age-toughness, it is also required to suppress weld hot cracking during welding.

Therefore, the weld metal of an austenitic stainless alloy welded joint to be used in a high-temperature corrosive environment described above is required to have weld hot cracking resistance, polythionic acid SCC resistance, naphthenic acid corrosion resistance, and excellent age-toughness.

Alloy materials to be used in such kind of high-temperature corrosive environments are proposed in Japanese Patent Application Publication No. 2003-166039 (Patent Literature 1) and International Application Publication No. WO2009/044802 (Patent Literature 2).

A heat resistant austenitic steel disclosed in Patent Literature 1 consists of, in mass%, C: 0.005 to less than 0.03%, Si: 0.05 to 0.4%, Mn: 0.5 to 2%, P: 0.01 to 0.04%, S: 0.0005 to 0.005%, Cr: 18 to 20%, Ni: 7 to 11%, Nb: 0.2 to 0.5%, V: 0.2 to 0.5%, Cu: 2 to 4%, N: 0.10 to 0.30%, and B: 0.0005 to 0.0080%, with the balance being Fe and unavoidable impurities. The total of the contents of Nb and V is 0.6% or more, and the solubility of Nb in the steel is 0.15% or more. In addition, $N/14 \geq Nb/93 + V/51$, and $Cr - 16C - 0.5Nb - V \geq 17.5$ are satisfied. In Patent Literature 1, the polythionic acid SCC resistance is increased by reducing the content of C and regulating the relation among Cr and C, Nb, and V.

An austenitic stainless steel disclosed in Patent Literature 2 contains, in mass%, C: less than 0.04%, Si: 1.5% or less, Mn: 2% or less, Cr: 15 to 25%, Ni: 6 to 30%, N: 0.02 to 0.35%, and sol. Al: 0.03% or less, and also contains one or more types among Nb: 0.5% or less, Ti: 0.4% or less, V: 0.4% or less, Ta: 0.2% or less, Hf: 0.2% or less, and Zr: 0.2% or less, with the balance being Fe and impurities. Among the impurities, P: 0.04% or less, S: 0.03% or less, Sn: 0.1% or less, As: 0.01% or less, Zn: 0.01% or less, Pb: 0.01% or less, and Sb: 0.01% or less. In addition, $F1 = S + \{(P + Sn)/2\} + \{(As + Zn + Pb + Sb)/5\} \leq 0.075$, and $0.05 \leq Nb + Ta + Zr + Hf + 2Ti + (V/10) \leq 1.7 - 9 \times F1$ are satisfied. In Patent Literature 2, the polythionic acid SCC resistance is increased by setting the content of C at less than 0.05%. In addition, by reducing C fixing elements such as Nb and Ti and reducing grain boundary embrittling elements such as P, S, and Sn in the steel, the embrittlement cracking resistance in a heat affected zone (HAZ) is increased.

# EP 4 534 714 A1

CITATION LIST

PATENT LITERATURE

    Patent Literature 1: Japanese Patent Application Publication No. 2003-166039
    Patent Literature 2: International Application Publication No. WO2009/044802

SUMMARY OF INVENTION

TECHNICAL PROBLEM

However, in Patent Literature 1 and Patent Literature 2, there is no discussion regarding the weld metal of the welded joint.

An objective of the present disclosure is to provide an austenitic stainless alloy welded joint including a weld metal that is excellent in weld hot cracking resistance, polythionic acid SCC resistance, naphthenic acid corrosion resistance, and age-toughness, and an austenitic stainless alloy welding material that is used in the austenitic stainless alloy welded joint.

SOLUTION TO PROBLEM

An austenitic stainless alloy welded joint according to the present disclosure is as follows.

An austenitic stainless alloy welded joint, including:

a base metal and a weld metal,
wherein:

a chemical composition of the base metal consists of, in mass%,
C: 0.030% or less,
Si: 0.10 to 1.00%,
Mn: 0.20 to 2.00%,
P: 0.040% or less,
S: 0.010% or less,
Cr: 16.0 to 25.0%,
Ni: 10.0 to 30.0%,
Mo: 0.1 to 5.0%,
Nb: 0.20 to 1.00%,
N: 0.05 to 0.30%,
sol. Al: 0.001 to 0.100%,
B: 0 to 0.0080%,
Cu: 0 to 5.00%,
W: 0 to 5.00%,
Co: 0 to 1.00%,
V: 0 to 1.00%,
Ta: 0 to 0.20%,
Hf: 0 to 0.20%,
Ca: 0 to 0.010%,
Mg: 0 to 0.010%, and
rare earth metal: 0 to 0.100%,
with the balance being Fe and impurities;
a chemical composition of the weld metal consists of, in mass%,
C: 0.020% or less,
Si: 0.01 to 1.00%,
Mn: 0.20 to 2.00%,
P: 0.030% or less,
S: 0.010% or less,
Cr: 16.0 to 25.0%,

Ni: 15.0 to 40.0%,
Mo: 2.5 to 5.0%,
Nb: 0.10 to 2.00%,
N: 0.05 to 0.30%,
sol. Al: 0.001 to 0.100%,
B: 0.0010 to 0.0050%,
Cu: 0 to 5.00%,
W: 0 to 5.00%,
Co: 0 to 1.00%,
V: 0 to 1.00%,
Ta: 0 to 0.20%,
Hf: 0 to 0.20%,
Ca: 0 to 0.010%,
Mg: 0 to 0.010%, and
rare earth metal: 0 to 0.100%,
with the balance being Fe and impurities, and with F1 defined by Formula (1) being 2.30 or less; and
when, in a cross section of the weld metal that is perpendicular to a weld metal extending direction, a square region of 1 mm × 1 mm that is a width center portion at a surface of the weld metal and is a thickness center portion of the weld metal is partitioned into minute square sections of 100 μm × 100 μm and a content of Mo in percent by mass in each minute square section is determined, and an arithmetic average value of all of the contents of Mo obtained is defined as $[Mo]_{AVE}$, an arithmetic average value of contents of Mo that are higher than $[Mo]_{AVE}$ among all of the contents of Mo obtained is defined as $[Mo]_H$, and an arithmetic average value of contents of Mo that are lower than $[Mo]_{AVE}$ among all of the contents of Mo obtained is defined as $[Mo]_L$,
F2 defined by Formula (2) is 2.5 or less;

F1 = 130B + 8C + 0.025Cr + 0.25Mn + 0.08Mo + 0.6Nb + 12P + 7.6S + 0.78Si + 0.012W (1)　　　　　　(1)

$$F2 = [Mo]_H/[Mo]_L \quad (2)$$

where, a content of a corresponding element in percent by mass in the weld metal is substituted for each symbol of an element in Formula (1).

An austenitic stainless alloy welding material according to the present disclosure is as follows.
An austenitic stainless alloy welding material having a chemical composition consisting of, in mass%,

C: 0.020% or less,
Si: 0.01 to 1.00%,
Mn: 0.20 to 2.00%,
P: 0.030% or less,
S: 0.010% or less,
Cr: 16.0 to 25.0%,
Ni: 15.0 to 40.0%,
Mo: 2.5 to 5.0%,
Nb: 0.10 to 2.00%,
N: 0.05 to 0.30%,
sol. Al: 0.001 to 0.100%,
B: 0.0010 to 0.0050%,
Cu: 0 to 5.00%,
W: 0 to 5.00%,
Co: 0 to 1.00%,
V: 0 to 1.00%,
Ta: 0 to 0.20%,
Hf: 0 to 0.20%,
Ca: 0 to 0.010%,
Mg: 0 to 0.010%, and
rare earth metal: 0 to 0.100%,

with the balance being Fe and impurities.

ADVANTAGEOUS EFFECTS OF INVENTION

The weld metal of the austenitic stainless alloy welded joint according to the present disclosure is excellent in weld hot cracking resistance, polythionic acid SCC resistance, naphthenic acid corrosion resistance, and age-toughness. The austenitic stainless alloy welding material according to the present disclosure serves as a raw material for a weld metal that achieves the advantageous effects described above.

BRIEF DESCRIPTION OF DRAWINGS

[FIG. 1] FIG. 1 is a plan view illustrating an example of an austenitic stainless alloy welded joint of the present embodiment.
[FIG. 2] FIG. 2 is a cross-sectional view of the austenitic stainless alloy welded joint of FIG. 1 which has been cut in a weld metal width direction.
[FIG. 3] FIG. 3 is a cross-sectional view of the austenitic stainless alloy welded joint of FIG. 1 which has been cut in a weld metal extending direction.
[FIG. 4] FIG. 4 is a cross-sectional view of the austenitic stainless alloy welded joint which has been cut in the weld metal extending direction, which is different from FIG. 3.
[FIG. 5] FIG. 5 is a cross-sectional view that is perpendicular to the weld metal extending direction of the austenitic stainless alloy welded joint of the present embodiment.
[FIG. 6] FIG. 6 is a schematic diagram for describing a bevel shape of a base metal in the Examples.
[FIG. 7] FIG. 7 is a schematic diagram of a welded joint that uses the base metal illustrated in FIG. 6.
[FIG. 8] FIG. 8 is a schematic diagram illustrating a position from which a plate-shaped test specimen used in the Examples is taken.
[FIG. 9] FIG. 9 is a schematic diagram illustrating a position from which a V-notch test specimen used in the Examples is taken.

DESCRIPTION OF EMBODIMENTS

The present inventors conducted studies regarding means for increasing the weld hot cracking resistance, the polythionic acid SCC resistance, the naphthenic acid corrosion resistance, and the age-toughness of a weld metal of an austenitic stainless alloy welded joint. As a result, the present inventors obtained the following findings.
First, the present inventors conducted studies regarding the chemical composition of a base metal constituting an austenitic stainless alloy welded joint. As a result, the present inventors considered that, from the viewpoint of the weld hot cracking resistance, the polythionic acid SCC resistance, the naphthenic acid corrosion resistance, and the age-toughness of the weld metal, it is appropriate for the base metal of an austenitic stainless alloy welded joint to satisfy the following Feature 1.

(Feature 1)

The chemical composition of the base metal consists of, in mass%, C: 0.030% or less, Si: 0.10 to 1.00%, Mn: 0.20 to 2.00%, P: 0.040% or less, S: 0.010% or less, Cr: 16.0 to 25.0%, Ni: 10.0 to 30.0%, Mo: 0.1 to 5.0%, Nb: 0.20 to 1.00%, N: 0.05 to 0.30%, sol. Al: 0.001 to 0.100%, B: 0 to 0.0080%, Cu: 0 to 5.00%, W: 0 to 5.00%, Co: 0 to 1.00%, V: 0 to 1.00%, Ta: 0 to 0.20%, Hf: 0 to 0.20%, Ca: 0 to 0.010%, Mg: 0 to 0.010%, and rare earth metal: 0 to 0.100%, with the balance being Fe and impurities.
The present inventors also conducted studies regarding the chemical composition of a weld metal of an austenitic stainless alloy welded joint. As a result, the present inventors considered that, by the chemical composition of the weld metal satisfying the following Feature 2, the weld hot cracking resistance, the polythionic acid SCC resistance, the naphthenic acid corrosion resistance, and the age-toughness will increase.

(Feature 2)

The chemical composition of the weld metal consists of, in mass%, C: 0.020% or less, Si: 0.01 to 1.00%, Mn: 0.20 to 2.00%, P: 0.030% or less, S: 0.010% or less, Cr: 16.0 to 25.0%, Ni: 15.0 to 40.0%, Mo: 2.5 to 5.0%, Nb: 0.10 to 2.00%, N: 0.05 to 0.30%, sol. Al: 0.001 to 0.100%, B: 0.0010 to 0.0050%, Cu: 0 to 5.00%, W: 0 to 5.00%, Co: 0 to 1.00%, V: 0 to 1.00%,

Ta: 0 to 0.20%, Hf: 0 to 0.20%, Ca: 0 to 0.010%, Mg: 0 to 0.010%, and rare earth metal: 0 to 0.100%, with the balance being Fe and impurities.

However, even when welded joints included a base metal having the chemical composition described above and a weld metal having the chemical composition described above, there were still cases where one or more among the weld hot cracking resistance, the polythionic acid SCC resistance, the naphthenic acid corrosion resistance, and the age-toughness were not sufficiently obtained in the weld metal. A weld metal is formed by welding. **In** this respect, the weld metal is different from the base metal, which is produced by hot working. Therefore, it is effective to increase the weld hot cracking resistance, the polythionic acid SCC resistance, the naphthenic acid corrosion resistance, and the age-toughness of the weld metal by means that is different from the means used in the case of the base metal.

Therefore, the present inventors conducted further studies regarding means for increasing the weld hot cracking resistance, the polythionic acid SCC resistance, the naphthenic acid corrosion resistance, and the age-toughness of the weld metal. As a result, it was revealed that by the weld metal of the welded joint further satisfying the following Feature 3 and Feature 4, the weld hot cracking resistance, the polythionic acid SCC resistance, the naphthenic acid corrosion resistance, and the age-toughness is sufficiently increased in the weld metal of the welded joint.

(Feature 3)

In the weld metal, F1 defined by Formula (1) is 2.30 or less:

$$F1 = 130B + 8C + 0.025Cr + 0.25Mn + 0.08Mo + 0.6Nb + 12P + 7.6S + 0.78Si + 0.012W \quad (1) \tag{1}$$

where, the content of a corresponding element in percent by mass in the weld metal is substituted for each symbol of an element in Formula (1).

(Feature 4)

In a cross section of the weld metal that is perpendicular to the weld metal extending direction, when a square region of 1 mm × 1 mm that is a width center portion at the surface of the weld metal and is a thickness center portion of the weld metal is partitioned into minute square sections of 100 $\mu$m × 100 $\mu$m and a content of Mo in percent by mass in each minute square section is determined, and an arithmetic average value of all of the contents of Mo obtained is defined as $[Mo]_{AVE}$, an arithmetic average value of contents of Mo that are higher than $[Mo]_{AVE}$ among all of the contents of Mo obtained is defined as $[Mo]_H$, and an arithmetic average value of contents of Mo that are lower than $[Mo]_{AVE}$ among all of the contents of Mo obtained is defined as $[Mo]_L$, F2 defined by Formula (2) is 2.5 or less.

$$F2 = [Mo]_H/[Mo]_L \quad (2)$$

An austenitic stainless alloy welded joint and an austenitic stainless alloy welding material according to the present embodiment, which were completed based on the above findings, are as follows.

[1] An austenitic stainless alloy welded joint, including:

a base metal and a weld metal,
wherein:

a chemical composition of the base metal consists of, in mass%,
C: 0.030% or less,
Si: 0.10 to 1.00%,
Mn: 0.20 to 2.00%,
P: 0.040% or less,
S: 0.010% or less,
Cr: 16.0 to 25.0%,
Ni: 10.0 to 30.0%,
Mo: 0.1 to 5.0%,
Nb: 0.20 to 1.00%,
N: 0.05 to 0.30%,
sol. Al: 0.001 to 0.100%,

B: 0 to 0.0080%,
Cu: 0 to 5.00%,
W: 0 to 5.00%,
Co: 0 to 1.00%,
V: 0 to 1.00%,
Ta: 0 to 0.20%,
Hf: 0 to 0.20%,
Ca: 0 to 0.010%,
Mg: 0 to 0.010%, and
rare earth metal: 0 to 0.100%,
with the balance being Fe and impurities;
a chemical composition of the weld metal consists of, in mass%,
C: 0.020% or less,
Si: 0.01 to 1.00%,
Mn: 0.20 to 2.00%,
P: 0.030% or less,
S: 0.010% or less,
Cr: 16.0 to 25.0%,
Ni: 15.0 to 40.0%,
Mo: 2.5 to 5.0%,
Nb: 0.10 to 2.00%,
N: 0.05 to 0.30%,
sol. Al: 0.001 to 0.100%,
B: 0.0010 to 0.0050%,
Cu: 0 to 5.00%,
W: 0 to 5.00%,
Co: 0 to 1.00%,
V: 0 to 1.00%,
Ta: 0 to 0.20%,
Hf: 0 to 0.20%,
Ca: 0 to 0.010%,
Mg: 0 to 0.010%, and
rare earth metal: 0 to 0.100%,
with the balance being Fe and impurities, and with F1 defined by Formula (1) being 2.30 or less; and
when, in a cross section of the weld metal that is perpendicular to a weld metal extending direction, a square region of 1 mm × 1 mm that is a width center portion at a surface of the weld metal and is a thickness center portion of the weld metal is partitioned into minute square sections of 100 $\mu$m × 100 $\mu$m and a content of Mo in percent by mass in each minute square section is determined, and an arithmetic average value of all of the contents of Mo obtained is defined as $[Mo]_{AVE}$, an arithmetic average value of contents of Mo that are higher than $[Mo]_{AVE}$ among all of the contents of Mo obtained is defined as $[Mo]_H$, and an arithmetic average value of contents of Mo that are lower than $[Mo]_{AVE}$ among all of the contents of Mo obtained is defined as $[Mo]_L$, F2 defined by Formula (2) is 2.5 or less;

F1 = 130B + 8C + 0.025Cr + 0.25Mn + 0.08Mo + 0.6Nb + 12P + 7.6S + 0.78Si + 0.012W (1)     (1)

$$F2 = [Mo]_H/[Mo]_L \quad (2)$$

where, a content of a corresponding element in percent by mass in the weld metal is substituted for each symbol of an element in Formula (1).

[2] The austenitic stainless alloy welded joint according to [1], wherein the chemical composition of the base metal contains one element or more selected from a group consisting of:

B: 0.0001 to 0.0080%,
Cu: 0.01 to 5.00%,
W: 0.01 to 5.00%,

Co: 0.01 to 1.00%,
V: 0.01 to 1.00%,
Ta: 0.01 to 0.20%,
Hf: 0.01 to 0.20%,
Ca: 0.001 to 0.010%,
Mg: 0.001 to 0.010%, and
rare earth metal: 0.001 to 0.100%.

[3] The austenitic stainless alloy welded joint according to [1] or [2], wherein the chemical composition of the weld metal contains one element or more selected from a group consisting of:

Cu: 0.01 to 5.00%,
W: 0.01 to 5.00%,
Co: 0.01 to 1.00%,
V: 0.01 to 1.00%,
Ta: 0.01 to 0.20%,
Hf: 0.01 to 0.20%,
Ca: 0.001 to 0.010%,
Mg: 0.001 to 0.010%, and
rare earth metal: 0 to 0.100%.

[4] An austenitic stainless alloy welding material, having a chemical composition consisting of, in mass%,

C: 0.020% or less,
Si: 0.01 to 1.00%,
Mn: 0.20 to 2.00%,
P: 0.030% or less,
S: 0.010% or less,
Cr: 16.0 to 25.0%,
Ni: 15.0 to 40.0%,
Mo: 2.5 to 5.0%,
Nb: 0.10 to 2.00%,
N: 0.05 to 0.30%,
sol. Al: 0.001 to 0.100%,
B: 0.0010 to 0.0050%,
Cu: 0 to 5.00%,
W: 0 to 5.00%,
Co: 0 to 1.00%,
V: 0 to 1.00%,
Ta: 0 to 0.20%,
Hf: 0 to 0.20%,
Ca: 0 to 0.010%,
Mg: 0 to 0.010%, and
rare earth metal: 0 to 0.100%,
with the balance being Fe and impurities.

Hereunder, the austenitic stainless alloy welded joint and the austenitic stainless alloy welding material of the present embodiment are described in detail. In the present description, the symbol "%" in relation to elements means "mass percent" unless specifically stated otherwise.

[Structure of austenitic stainless alloy welded joint]

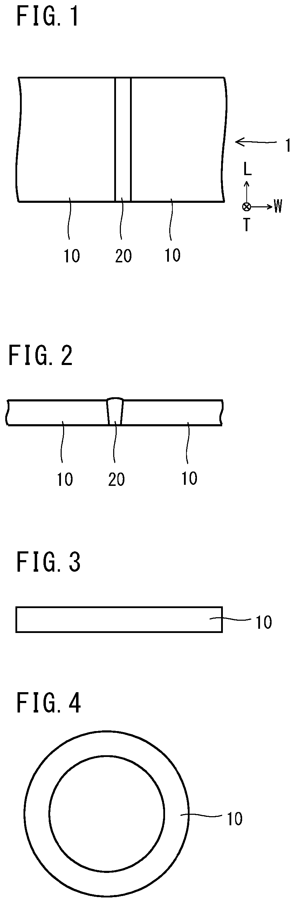

FIG. 1 is a plan view illustrating one example of an austenitic stainless alloy welded joint 1 of the present embodiment. Referring to FIG. 1, the austenitic stainless alloy welded joint 1 of the present embodiment includes a base metal 10 and a weld metal 20. The weld metal 20 is formed by butting together ends of a pair of the base metals 10 whose ends have been beveled, and thereafter performing welding. The welding is, for example, gas tungsten arc welding (GTAW), shielded metal arc welding (SMAW), flux cored arc welding (FCAW), gas metal arc welding (GMAW), or submerged arc welding (SAW).

In FIG. 1, a direction in which the weld metal 20 extends is defined as a "weld metal extending direction L". A direction perpendicular to the weld metal extending direction L in plan view is defined as a "weld metal width direction W". A direction that is perpendicular to the weld metal extending direction L and the weld metal width direction W is defined as a "weld metal thickness direction T". FIG. 2 is a cross-sectional view illustrating a state in which the austenitic stainless alloy welded joint 1 shown in FIG. 1 has been cut in the weld metal width direction W. As illustrated in FIG. 1 and FIG. 2, the weld metal 20 is formed between the pair of base metals 10.

FIG. 3 is a cross-sectional view illustrating a state in which the austenitic stainless alloy welded joint 1 shown in FIG. 1 has been cut in the weld metal extending direction L. FIG. 4 is a cross-sectional view illustrating a state in which the austenitic stainless alloy welded joint 1 has been cut in the weld metal extending direction L, which is different from FIG. 3. As illustrated in FIG. 3, the shape of the base metal 10 may be a plate shape. Further, as illustrated in FIG. 4, the base metal 10 may be formed in the shape of an alloy pipe. Although not illustrated in the drawings, the base metal 10 may also be formed in the shape of a bar or a section shape steel.

[Features of austenitic stainless alloy welded joint 1 of present embodiment]

The austenitic stainless alloy welded joint 1 of the present embodiment satisfies the following Feature 1 to Feature 4.

(Feature 1)

The chemical composition of the base metal 10 consists of, in mass%, C: 0.030% or less, Si: 0.10 to 1.00%, Mn: 0.20 to 2.00%, P: 0.040% or less, S: 0.010% or less, Cr: 16.0 to 25.0%, Ni: 10.0 to 30.0%, Mo: 0.1 to 5.0%, Nb: 0.20 to 1.00%, N: 0.05 to 0.30%, sol. Al: 0.001 to 0.100%, B: 0 to 0.0080%, Cu: 0 to 5.00%, W: 0 to 5.00%, Co: 0 to 1.00%, V: 0 to 1.00%, Ta: 0 to 0.20%, Hf: 0 to 0.20%, Ca: 0 to 0.010%, Mg: 0 to 0.010%, and rare earth metal: 0 to 0.100%, with the balance being Fe and impurities.

(Feature 2)

The chemical composition of the weld metal 20 consists of, in mass%, C: 0.020% or less, Si: 0.01 to 1.00%, Mn: 0.20 to 2.00%, P: 0.030% or less, S: 0.010% or less, Cr: 16.0 to 25.0%, Ni: 15.0 to 40.0%, Mo: 2.5 to 5.0%, Nb: 0.10 to 2.00%, N: 0.05 to 0.30%, sol. Al: 0.001 to 0.100%, B: 0.0010 to 0.0050%, Cu: 0 to 5.00%, W: 0 to 5.00%, Co: 0 to 1.00%, V: 0 to 1.00%, Ta: 0 to 0.20%, Hf: 0 to 0.20%, Ca: 0 to 0.010%, Mg: 0 to 0.010%, and rare earth metal: 0 to 0.100%, with the balance being Fe and impurities.

(Feature 3)

In the weld metal 20, F1 defined by Formula (1) is 2.30 or less:

F1 = 130B + 8C + 0.025Cr + 0.25Mn + 0.08Mo + 0.6Nb + 12P + 7.6S + 0.78Si + 0.012W (1)    (1)

where, the content of the corresponding element in percent by mass in the weld metal 20 is substituted for each symbol of an element in Formula (1).

(Feature 4)

In a cross section of the weld metal that is perpendicular to the extending direction of the weld metal 20, when a square region of 1 mm $\times$ 1 mm that is a width center portion at the surface of the weld metal and is a thickness center portion of the weld metal is partitioned into minute square sections of 100 $\mu$m $\times$ 100 $\mu$m and the content of Mo in percent by mass in each minute square section is determined, and an arithmetic average value of all of the contents of Mo obtained is defined as $[\text{Mo}]_{\text{AVE}}$, an arithmetic average value of contents of Mo that are higher than $[\text{Mo}]_{\text{AVE}}$ among all of the contents of Mo obtained is defined as $[\text{Mo}]_{\text{H}}$, and an arithmetic average value of contents of Mo that are lower than $[\text{Mo}]_{\text{AVE}}$ among all of the contents of Mo obtained is defined as $[\text{Mo}]_{\text{L}}$, F2 defined by Formula (2) is 2.5 or less.

$$F2 = [\text{Mo}]_{\text{H}}/[\text{Mo}]_{\text{L}} \quad (2)$$

Hereunder, each of Feature 1 to Feature 4 is described.

[(Feature 1) Regarding chemical composition of base metal 10]

The chemical composition of the base metal 10 of the austenitic stainless alloy welded joint 1 of the present embodiment contains the following elements.

C: 0.030% or less

Carbon (C) is unavoidably contained. That is, the content of C is more than 0%. During use under a high-temperature corrosive environment of 600 to 700°C, C forms Cr carbides ($M_{23}C_6$-type carbides) at grain boundaries of the base metal 10. Dissolved Cr decreases due to the formation of the Cr carbides. Consequently, the polythionic acid SCC resistance of the base metal 10 decreases. Therefore, the content of C is 0.030% or less.

The content of C is preferably as low as possible. However, excessively reducing the content of C will raise the production cost. Therefore, in industrial production, a preferable lower limit of the content of C is 0.001%, and more preferably is 0.002%.

A preferable upper limit of the content of C is 0.025%, more preferably is 0.020%, further preferably is 0.018%, further preferably is 0.016%, and further preferably is 0.015%.

Si: 0.10 to 1.00%

Silicon (Si) deoxidizes the alloy. If the content of Si is less than 0.10%, the aforementioned advantageous effect will not be sufficiently obtained even if the contents of other elements are within the range of the present embodiment. On the other hand, if the content of Si is more than 1.00%, sigma phase ($\sigma$ phase) will precipitate in the base metal 10, and the age-toughness of the alloy will decrease. Therefore, the content of Si is 0.10 to 1.00%.

A preferable lower limit of the content of Si is 0.15%, more preferably is 0.17%, further preferably is 0.18%, further preferably is 0.20%, and further preferably is 0.25%.

A preferable upper limit of the content of Si is 0.95%, more preferably is 0.90%, further preferably is 0.85%, further preferably is 0.80%, further preferably is 0.75%, further preferably is 0.70%, further preferably is 0.50%, and further preferably is 0.45%.

Mn: 0.20 to 2.00%

Manganese (Mn) deoxidizes the alloy. Mn also stabilizes austenite and suppresses a decrease in the age-toughness of the base metal 10. If the content of Mn is less than 0.20%, the aforementioned advantageous effects will not be sufficiently obtained even if the contents of other elements are within the range of the present embodiment. On the other hand, if the content of Mn is more than 2.00%, the high-temperature strength of the base metal 10 will decrease. Therefore, the content of Mn is 0.20 to 2.00%.

A preferable lower limit of the content of Mn is 0.30%, more preferably is 0.35%, further preferably is 0.40%, further preferably is 0.50%, further preferably is 0.60%, further preferably is 0.70%, and further preferably is 0.80%.

A preferable upper limit of the content of Mn is 1.90%, more preferably is 1.85%, further preferably is 1.80%, further preferably is 1.75%, further preferably is 1.70%, further preferably is 1.60%, and further preferably is 1.50%.

P: 0.040% or less

Phosphorus (P) is an impurity that is unavoidably contained. That is, the content of P is more than 0%. If the content of P is more than 0.040%, even if the contents of other elements are within the range of the present embodiment, the weld hot cracking resistance of the base metal 10 will decrease. Therefore, the content of P is 0.040% or less.

The content of P is preferably as low as possible. However, excessively reducing the content of P will raise the production cost. Therefore, in industrial production, a preferable lower limit of the content of P is 0.001%, and more preferably is 0.002%.

A preferable upper limit of the content of P is 0.035%, more preferably is 0.032%, further preferably is 0.028%, and further preferably is 0.026%.

S: 0.010% or less

Sulfur (S) is an impurity that is unavoidably contained. That is, the content of S is more than 0%. If the content of S is more than 0.010%, even if the contents of other elements are within the range of the present embodiment, the weld hot cracking resistance of the base metal 10 will decrease. Therefore, the content of S is 0.010% or less.

The content of S is preferably as low as possible. However, excessively reducing the content of S will raise the production cost. Therefore, in industrial production, a preferable lower limit of the content of S is 0.001%.

A preferable upper limit of the content of S is 0.007%, more preferably is 0.006%, further preferably is 0.005%, further preferably is 0.004%, and further preferably is 0.003%.

Cr: 16.0 to 25.0%

Chromium (Cr) increases the polythionic acid SCC resistance of the base metal 10. If the content of Cr is less than 16.0%, the aforementioned advantageous effect will not be sufficiently obtained even if the contents of other elements are within the range of the present embodiment. On the other hand, if the content of Cr is more than 25.0%, the age-toughness of the base metal 10 will decrease. Therefore, the content of Cr is 16.0 to 25.0%.

A preferable lower limit of the content of Cr is 16.5%, more preferably is 17.0%, further preferably is 17.2%, and further preferably is 17.4%.

A preferable upper limit of the content of Cr is 24.0%, more preferably is 23.0%, and further preferably is 22.0%.

Ni: 10.0 to 30.0%

Nickel (Ni) stabilizes austenite and increases the age-toughness of the base metal 10. If the content of Ni is less than 10.0%, the aforementioned advantageous effect will not be sufficiently obtained even if the contents of other elements are within the range of the present embodiment. On the other hand, if the content of Ni is more than 30.0%, the aforementioned advantageous effect will be saturated, and furthermore, the production cost will increase. Therefore, the content of Ni is 10.0 to 30.0%.

A preferable lower limit of the content of Ni is 11.0%, more preferably is 12.0%, further preferably is 13.0%, and further preferably is 13.5%.

A preferable upper limit of the content of Ni is 27.0%, more preferably is 26.0%, further preferably is 25.0%, further preferably is 22.0%, further preferably is 20.0%, further preferably is 18.0%, and further preferably is 17.0%.

Mo: 0.1 to 5.0%

Molybdenum (Mo) forms a sulfide film on the surface of the base metal 10 during use under a high-temperature corrosive environment of 600 to 700°C in such a way that dissolved Mo in the base metal 10 combines with S in the usage environment. The naphthenic acid corrosion resistance is increased by the formation of this sulfide film. If the content of Mo is less than 0.1%, the aforementioned advantageous effect will not be sufficiently obtained even if the contents of other elements are within the range of the present embodiment. On the other hand, if the content of Mo is more than 5.0%, weld hot cracking may occur in a HAZ during welding and the age-toughness may decrease. Therefore, the content of Mo is 0.1 to 5.0%.

A preferable lower limit of the content of Mo is 0.2%, more preferably is 0.3%, further preferably is 0.5%, further preferably is 1.0%, further preferably is 1.5%, and further preferably is 2.0%.

A preferable upper limit of the content of Mo is 4.5%, and more preferably is 4.0%.

Nb: 0.20 to 1.00%

Niobium (Nb) is an element which, during use under a high-temperature corrosive environment of 600 to 700°C, combines with C to form MX-type carbo-nitrides and thereby reduces the amount of dissolved C in the base metal 10. As a result, the polythionic acid SCC resistance of the base metal 10 increases. If the content of Nb is less than 0.20%, the aforementioned advantageous effect will not be sufficiently obtained even if the contents of other elements are within the range of the present embodiment. On the other hand, if the content of Nb is more than 1.00%, $\delta$-ferrite will form and the age-toughness of the base metal 10 will decrease. Therefore, the content of Nb is 0.20 to 1.00%.

A preferable lower limit of the content of Nb is 0.25%, more preferably is 0.28%, further preferably is 0.30%, and further preferably is 0.32%.

A preferable upper limit of the content of Nb is 0.90%, more preferably is 0.85%, further preferably is 0.80%, further preferably is 0.70%, and further preferably is 0.65%.

N: 0.05 to 0.30%

Nitrogen (N) dissolves in the matrix (parent phase) and stabilizes austenite, thereby increasing the high-temperature strength of the base metal 10. N also forms fine carbo-nitrides in grains, which increases the high-temperature strength of the base metal 10. If the content of N is less than 0.05%, the aforementioned advantageous effect will not be sufficiently obtained even if the contents of other elements are within the range of the present embodiment. On the other hand, if the content of N is more than 0.30%, Cr nitrides will form at grain boundaries. In such a case, the polythionic acid SCC resistance and the naphthenic acid corrosion resistance in a heat affected zone (HAZ) of the base metal 10 will decrease. Therefore, the content of N is 0.05 to 0.30%.

A preferable lower limit of the content of N is 0.06%, more preferably is 0.07%, further preferably is 0.08%, and further preferably is 0.10%.

A preferable upper limit of the content of N is 0.25%, more preferably is 0.20%, and further preferably is 0.19%.

Sol. Al: 0.001 to 0.100%

Aluminum (Al) deoxidizes the alloy. If the content of Al is less than 0.001%, the aforementioned advantageous effect will not be sufficiently obtained even if the contents of other elements are within the range of the present embodiment. On the other hand, if the content of Al is more than 0.100%, the cleanliness of the alloy will decrease, and the workability and ductility of the alloy will decrease. Therefore, the content of Al is 0.001 to 0.100%.

A preferable lower limit of the content of Al is 0.002%, and more preferably is 0.003%.

A preferable upper limit of the content of Al is 0.050%, more preferably is 0.030%, further preferably is 0.026%, and further preferably is 0.025%.

In the present embodiment, the content of Al means the content of acid-soluble Al (sol. Al).

The balance of the chemical composition of the base metal 10 of the austenitic stainless alloy welded joint 1 according to the present embodiment is Fe and impurities. Here, the term "impurities" means substances which are mixed in from ore and scrap used as the raw material or from the production environment or the like when industrially producing the aforementioned base metal 10, and which are not intentionally contained but are permitted within a range that does not adversely affect the base metal 10 of the austenitic stainless alloy welded joint 1 of the present embodiment.

[Optional elements]

The chemical composition of the base metal 10 of the austenitic stainless alloy welded joint 1 of the present embodiment may further contain, in lieu of a part of Fe, one element or more selected from the group consisting of:

B: 0 to 0.0080%,
Cu: 0 to 5.00%,
W: 0 to 5.00%,
Co: 0 to 1.00%,
V: 0 to 1.00%,
Ta: 0 to 0.20%,
Hf: 0 to 0.20%,
Ca: 0 to 0.010%,
Mg: 0 to 0.010%, and
rare earth metal: 0 to 0.100%.

Hereunder, these optional elements are described.

[First group: Regarding B, Cu, W, and Co]

The chemical composition of the base metal 10 according to the present embodiment may further contain one element or more selected from the group consisting of B, Cu, W, and Co in lieu of a part of Fe. Each of these elements is an optional element, and does not have to be contained. When contained, each of the elements B, Cu, W, and Co increases the high-temperature strength of the base metal 10.

B: 0 to 0.0080%

Boron (B) is an optional element, and does not have to be contained. That is, B may be 0%. In a case where B is contained, that is, when the content of B is more than 0%, during use under a high-temperature corrosive environment of 600 to 700°C, B segregates to grain boundaries and increases the grain boundary strength. As a result, under a high-temperature corrosive environment of 600 to 700°C, the high-temperature strength of the base metal 10 increases. If even a small amount of B is contained, the aforementioned advantageous effect will be obtained to a certain extent. On the other hand, if the content of B is more than 0.0080%, the content of B of the weld metal will increase during welding, and the weld hot cracking resistance of the weld metal 20 will decrease. Therefore, the content of B is 0 to 0.0080%.

A preferable lower limit of the content of B is 0.0001%, more preferably is 0.0005%, further preferably is 0.0010%, further preferably is 0.0015%, further preferably is 0.0018%, further preferably is 0.0020%, and further preferably is 0.0022%.

A preferable upper limit of the content of B is less than 0.0060%, more preferably is 0.0050%, and further preferably is 0.0040%.

Cu: 0 to 5.00%

Copper (Cu) is an optional element, and does not have to be contained. That is, Cu may be 0%. In a case where Cu is contained, that is, when the content of Cu is more than 0%, during use under a high-temperature corrosive environment of 600 to 700°C, Cu precipitates as a Cu phase in the grains, and increases the high-temperature strength of the base metal 10 by precipitation strengthening. If even a small amount of Cu is contained, the aforementioned advantageous effect will be obtained to a certain extent. However, if the content of Cu is more than 5.00%, the hot workability and weldability of the alloy will decrease. Therefore, the content of Cu is 0 to 5.00%.

A preferable lower limit of the content of Cu is 0.01%, more preferably is 0.05%, further preferably is 0.10%, further preferably is 0.50%, further preferably is 1.00%, further preferably is 2.00%, and further preferably is 2.50%.

A preferable upper limit of the content of Cu is 4.50%, more preferably is 4.00%, further preferably is 3.80%, further preferably is 3.70%, further preferably is 3.60%, further preferably is 3.50%, and further preferably is 3.00%.

W: 0 to 5.00%

Tungsten (W) is an optional element, and does not have to be contained. That is, W may be 0%. In a case where W is contained, that is, when the content of W is more than 0%, W dissolves in the matrix (parent phase) and increases the high-temperature strength of the base metal 10 of the austenitic stainless alloy welded joint 1. If even a small amount of W is contained, the aforementioned advantageous effect will be obtained to a certain extent. However, if the content of W is more than 5.00%, the stability of austenite will decrease, and the age-toughness of the base metal 10 will decrease. Therefore, the content of W is 0 to 5.00%.

A preferable lower limit of the content of W is 0.01%, more preferably is 0.02%, further preferably is 0.05%, and further preferably is 0.10%.

A preferable upper limit of the content of W is 4.50%, more preferably is 4.00%, and further preferably is 3.50%.

Co: 0 to 1.00%

Cobalt (Co) is an optional element, and does not have to be contained. That is, the content of Co may be 0%. In a case where Co is contained, that is, when the content of Co is more than 0%, Co stabilizes austenite and increases the high-temperature strength of the base metal 10 of the austenitic stainless alloy welded joint 1. If even a small amount of Co is contained, the aforementioned advantageous effect will be obtained to a certain extent. However, if the content of Co is more than 1.00%, the raw material cost will increase. Therefore, the content of Co is 0 to 1.00%.

A preferable lower limit of the content of Co is 0.01%, more preferably is 0.02%, further preferably is 0.03%, and further preferably is 0.10%.

A preferable upper limit of the content of Co is 0.90%, more preferably is 0.80%, and further preferably is 0.60%.

[Second group: Regarding V, Ta, and Hf]

The chemical composition of the base metal 10 according to the present embodiment may further contain one element or more selected from the group consisting of V, Ta, and Hf in lieu of a part of Fe. Each of these elements is an optional element, and does not have to be contained. When contained, each of the elements V, Ta, and Hf increases the polythionic acid SCC resistance of the base metal 10.

V: 0 to 1.00%

Vanadium (V) is an optional element, and does not have to be contained. That is, the content of V may be 0%. In a case where V is contained, that is, when the content of V is more than 0%, during use under a high-temperature corrosive environment of 600 to 700°C, V combines with C to form carbo-nitrides. As a result, dissolved C in the base metal 10 decreases, and the polythionic acid SCC resistance of the base metal 10 increases. If even a small amount of V is contained, the aforementioned advantageous effect will be obtained to a certain extent. However, if the content of V is more than 1.00%, $\delta$-ferrite will form and the age-toughness of the base metal 10 will decrease. Therefore, the content of V is 0 to 1.00%.

A preferable lower limit of the content of V is 0.01%, more preferably is 0.05%, and further preferably is 0.10%.

A preferable upper limit of the content of V is 0.90%, more preferably is 0.80%, further preferably is 0.60%, further preferably is 0.40%, and further preferably is 0.20%.

Ta: 0 to 0.20%

Tantalum (Ta) is an optional element, and does not have to be contained. That is, the content of Ta may be 0%. In a case where Ta is contained, that is, when the content of Ta is more than 0%, during use under a high-temperature corrosive environment of 600 to 700°C, Ta combines with C to form carbo-nitrides. As a result, dissolved C in the base metal 10 decreases, and the polythionic acid SCC resistance of the base metal 10 increases. If even a small amount of Ta is contained, the aforementioned advantageous effect will be obtained to a certain extent. However, if the content of Ta is more than 0.20%, δ-ferrite will form and the age-toughness of the base metal 10 will decrease. Therefore, the content of Ta is 0 to 0.20%.
A preferable lower limit of the content of Ta is 0.01%, and more preferably is 0.02%.
A preferable upper limit of the content of Ta is 0.18%, more preferably is 0.16%, and further preferably is 0.14%.

Hf: 0 to 0.20%

Hafnium (Hf) is an optional element, and does not have to be contained. That is, the content of Hf may be 0%. In a case where Hf is contained, that is, when the content of Hf is more than 0%, during use under a high-temperature corrosive environment of 600 to 700°C, Hf combines with C to form carbo-nitrides. As a result, dissolved C in the base metal 10 decreases and the polythionic acid SCC resistance of the base metal 10 increases. If even a small amount of Hf is contained, the aforementioned advantageous effect will be obtained to a certain extent. However, if the content of Hf is more than 0.20%, δ-ferrite will form and the creep strength, toughness, and weldability of the base metal 10 will decrease. Therefore, the content of Hf is 0 to 0.20%.
A preferable lower limit of the content of Hf is 0.01%, and more preferably is 0.02%.
A preferable upper limit of the content of Hf is 0.18%, more preferably is 0.16%, and further preferably is 0.14%.

[Third group: Regarding Ca, Mg, and rare earth metal]

The chemical composition of the base metal 10 according to the present embodiment may further contain one element or more selected from the group consisting of Ca, Mg, and rare earth metal (REM) in lieu of a part of Fe. Each of these elements is an optional element, and does not have to be contained. When contained, Ca, Mg, and rare earth metal each increases the hot workability of the base metal.

Ca: 0 to 0.010%

Calcium (Ca) is an optional element, and does not have to be contained. That is, the content of Ca may be 0%. In a case where Ca is contained, that is, when the content of Ca is more than 0%, Ca immobilizes O (oxygen) and S (sulfur) as inclusions, and thereby increases the hot workability of the base metal 10. If even a small amount of Ca is contained, the aforementioned advantageous effect will be obtained to a certain extent. However, if the content of Ca is more than 0.010%, the hot workability and creep ductility of the base metal 10 will decrease. Therefore, the content of Ca is 0 to 0.010%.
A preferable lower limit of the content of Ca is 0.001%, and more preferably is 0.002%.
A preferable upper limit of the content of Ca is 0.008%, more preferably is 0.006%, and further preferably is 0.004%.

Mg: 0 to 0.010%

Magnesium (Mg) is an optional element, and does not have to be contained. That is, the content of Mg may be 0%. In a case where Mg is contained, that is, when the content of Mg is more than 0%, Mg immobilizes O (oxygen) and S (sulfur) as inclusions, and thereby increases the hot workability of the base metal 10. If even a small amount of Mg is contained, the aforementioned advantageous effect will be obtained to a certain extent. However, if the content of Mg is more than 0.010%, the hot workability and creep ductility of the base metal 10 will decrease. Therefore, the content of Mg is 0 to 0.010%.
A preferable lower limit of the content of Mg is 0.001%, and more preferably is 0.002%.
A preferable upper limit of the content of Mg is 0.008%, more preferably is 0.006%, and further preferably is 0.004%.

Rare earth metal: 0 to 0.100%

Rare earth metal (REM) is an optional element, and does not have to be contained. That is, the content of REM may be 0%. In a case where REM is contained, that is, when the content of REM is more than 0%, REM immobilizes O (oxygen) and S (sulfur) as inclusions, and thereby increases the hot workability of the base metal. If even a small amount of REM is contained, the aforementioned advantageous effect will be obtained to a certain extent. However, if the content of REM is more than 0.100%, the hot workability and creep ductility of the base metal will decrease. Therefore, the content of REM is 0 to 0.100%.

A preferable lower limit of the content of REM is 0.001%, and more preferably is 0.002%.

A preferable upper limit of the content of REM is 0.080%, and more preferably is 0.060%.

In the present description, the term "REM" includes at least one or more elements among Sc, Y, and lanthanoids (elements from La with atomic number 57 through Lu with atomic number 71), and the term "content of REM" means the total content of these elements.

[(Feature 2) Regarding chemical composition of weld metal 20]

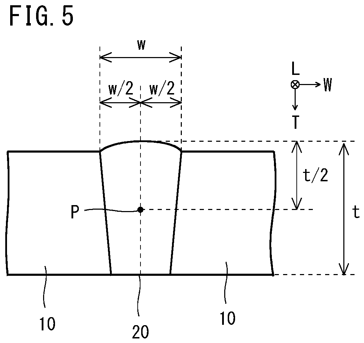

FIG. 5 is a cross-sectional view perpendicular to the weld metal extending direction L of the austenitic stainless alloy welded joint 1 of the present embodiment. Referring to FIG. 5, in a cross section of the weld metal 20 that is perpendicular to the weld metal extending direction L, the width of the surface of the weld metal 20 is defined as w (mm). Further, the thickness of the weld metal 20 at the center portion of the width w is defined as t (mm). At this time, a region which is the width center portion of the weld metal 20 and is also the thickness center portion of the weld metal 20 (that is, a portion at a depth of t/2 from the surface of the weld metal 20) is defined as a region P. The chemical composition of the region P is defined as the chemical composition of the weld metal 20. The chemical composition of the weld metal 20 contains the following elements.

C: 0.020% or less

Carbon (C) is unavoidably contained. That is, the content of C is more than 0%. During use under a high-temperature corrosive environment of 600 to 700°C, C forms Cr carbides ($M_{23}C_6$-type carbides) at grain boundaries of the weld metal 20. By forming the Cr carbides, dissolved Cr is reduced. Consequently, the polythionic acid SCC resistance of the weld metal 20 decreases. Therefore, the content of C is 0.020% or less.

The content of C is preferably as low as possible. However, excessively reducing the content of C will raise the production cost. Therefore, in industrial production, a preferable lower limit of the content of C is 0.001%, and more preferably is 0.005%.

A preferable upper limit of the content of C is 0.019%, more preferably is 0.018%, further preferably is 0.017%, and further preferably is 0.015%.

Si: 0.01 to 1.00%

Silicon (Si) deoxidizes the weld metal 20 during welding. If the content of Si is less than 0.01%, the aforementioned advantageous effect will not be sufficiently obtained even if the contents of other elements are within the range of the present embodiment. On the other hand, if the content of Si is more than 1.00%, the age-toughness of the weld metal 20 will decrease. Therefore, the content of Si is 0.01 to 1.00%.

A preferable lower limit of the content of Si is 0.02%, more preferably is 0.03%, further preferably is 0.05%, and further preferably is 0.10%.

A preferable upper limit of the content of Si is 0.95%, more preferably is 0.90%, further preferably is 0.80%, further preferably is 0.76%, further preferably is 0.65%, further preferably is 0.40%, and further preferably is 0.35%.

Mn: 0.20 to 2.00%

Manganese (Mn) deoxidizes the weld metal 20 during welding. If the content of Mn is less than 0.20%, the aforementioned advantageous effect will not be sufficiently obtained even if the contents of other elements are within the range of the present embodiment. On the other hand, if the content of Mn is more than 2.00%, the high-temperature strength of the weld metal 20 will decrease.

Therefore, the content of Mn is 0.20 to 2.00%.

A preferable lower limit of the content of Mn is 0.25%, more preferably is 0.28%, further preferably is 0.30%, further preferably is 0.35%, and further preferably is 0.40%.

A preferable upper limit of the content of Mn is 1.90%, more preferably is 1.85%, further preferably is 1.80%, further preferably is 1.75%, further preferably is 1.70%, further preferably is 1.50%, and further preferably is 1.30%.

P: 0.030% or less

Phosphorus (P) is an impurity that is unavoidably contained. That is, the content of P is more than 0%. If the content of P is more than 0.030%, even if the contents of other elements are within the range of the present embodiment, the weld hot cracking resistance of the weld metal 20 will decrease. Therefore, the content of P is 0.030% or less.
The content of P is preferably as low as possible. However, excessively reducing the content of P will raise the production cost. Therefore, in industrial production, a preferable lower limit of the content of P is 0.001%, more preferably is 0.002%, and further preferably is 0.003%.
A preferable upper limit of the content of P is 0.025%, and more preferably is 0.020%.

S: 0.010% or less

Sulfur (S) is an impurity that is unavoidably contained. That is, the content of S is more than 0%. If the content of S is more than 0.010%, even if the contents of other elements are within the range of the present embodiment, the weld hot cracking resistance of the weld metal 20 will decrease. Therefore, the content of S is 0.010% or less.
The content of S is preferably as low as possible. However, excessively reducing the content of S will raise the production cost. Therefore, in industrial production, a preferable lower limit of the content of S is 0.001%, and more preferably is 0.002%.
A preferable upper limit of the content of S is 0.009%, and more preferably is 0.007%.

Cr: 16.0 to 25.0%

Chromium (Cr) increases the polythionic acid SCC resistance of the weld metal 20. If the content of Cr is less than 16.0%, the aforementioned advantageous effect will not be sufficiently obtained even if the contents of other elements are within the range of the present embodiment. On the other hand, if the content of Cr is more than 25.0%, the age-toughness of the weld metal 20 will decrease. Therefore, the content of Cr is 16.0 to 25.0%.
A preferable lower limit of the content of Cr is 16.5%, and more preferably is 17.0%.
A preferable upper limit of the content of Cr is 24.5%, more preferably is 24.0%, further preferably is 23.5%, and further preferably is 23.0%.

Ni: 15.0 to 40.0%

Nickel (Ni) stabilizes austenite and increases the age-toughness of the weld metal 20. If the content of Ni is less than 15.0%, the aforementioned advantageous effect will not be sufficiently obtained even if the contents of other elements are within the range of the present embodiment. On the other hand, if the content of Ni is more than 40.0%, the aforementioned advantageous effect will be saturated, and furthermore, the production cost will increase. Therefore, the content of Ni is 15.0 to 40.0%.
A preferable lower limit of the content of Ni is 15.5%, more preferably is 16.0%, further preferably is 17.0%, further preferably is 18.0%, and further preferably is 19.0%.
A preferable upper limit of the content of Ni is 39.0%, more preferably is 38.0%, further preferably is 36.5%, further preferably is 35.0%, and further preferably is 33.0%.

Mo: 2.5 to 5.0%

Molybdenum (Mo) suppresses the formation of Cr carbides ($M_{23}C_6$-type carbides) at grain boundaries in the weld metal 20 during use under a high-temperature corrosive environment of 600 to 700°C. By this means, Mo increases the polythionic acid SCC resistance of the weld metal 20. In addition, Mo forms a sulfide film on the surface of the weld metal 20 when the welded joint is being used under a high-temperature corrosive environment in such a way that dissolved Mo in the weld metal 20 combines with S in the usage environment. The naphthenic acid corrosion resistance of the weld metal 20 is increased by formation of the sulfide film. If the content of Mo is less than 2.5%, the aforementioned advantageous effects will not be sufficiently obtained even if the contents of other elements are within the range of the present embodiment. On the other hand, if the content of Mo is more than 5.0%, sufficient age-toughness will not be obtained. Therefore, the content of Mo is 2.5 to 5.0%.
A preferable lower limit of the content of Mo is 2.6%, more preferably is 2.7%, and further preferably is 2.8%.
A preferable upper limit of the content of Mo is 4.5%, and more preferably is 4.0%.

Nb: 0.10 to 2.00%

Niobium (Nb) is an element which, during use under a high-temperature corrosive environment of 600 to 700°C, combines with C to form MX-type carbo-nitrides and thereby reduces the amount of dissolved C in the weld metal 20. As a result, the polythionic acid SCC resistance of the weld metal 20 increases. The formed MX-type carbo-nitrides of Nb also increase the creep strength. If the content of Nb is less than 0.10%, the aforementioned advantageous effects will not be sufficiently obtained even if the contents of other elements are within the range of the present embodiment. On the other hand, if the content of Nb is more than 2.00%, δ-ferrite will form and the long-term creep strength, toughness, and weldability of the weld metal 20 will decrease. Therefore, the content of Nb is 0.10 to 2.00%.

A preferable lower limit of the content of Nb is 0.11%, more preferably is 0.12%, further preferably is 0.15%, and further preferably is 0.20%.

A preferable upper limit of the content of Nb is 1.90%, more preferably is 1.80%, further preferably is 1.40%, further preferably is 1.00%, further preferably is 0.75%, further preferably is 0.70%, and further preferably is 0.65%.

N: 0.05 to 0.30%

Nitrogen (N) dissolves in the matrix (parent phase) and stabilizes austenite, thereby increasing the high-temperature strength of the weld metal 20. N also forms fine carbo-nitrides in grains, which increases the high-temperature strength of the weld metal 20. If the content of N is less than 0.05%, the aforementioned advantageous effect will not be sufficiently obtained even if the contents of other elements are within the range of the present embodiment. On the other hand, if the content of N is more than 0.30%, Cr nitrides will form at grain boundaries, and consequently the polythionic acid SCC resistance and the naphthenic acid corrosion resistance in the weld metal 20 will decrease. Therefore, the content of N is 0.05 to 0.30%.

A preferable lower limit of the content of N is 0.06%, more preferably is 0.07%, further preferably is 0.08%, and further preferably is 0.10%.

A preferable upper limit of the content of N is 0.28%, and more preferably is 0.25%.

Sol. Al: 0.001 to 0.100%

Aluminum (Al) deoxidizes the weld metal 20 during welding. If the content of Al is less than 0.001%, the aforementioned advantageous effect will not be sufficiently obtained even if the contents of other elements are within the range of the present embodiment. On the other hand, if the content of Al is more than 0.100%, the ductility of the weld metal 20 will decrease. Therefore, the content of Al is 0.001 to 0.100%.

A preferable lower limit of the content of Al is 0.002%, and more preferably is 0.010%.

A preferable upper limit of the content of Al is 0.085%, more preferably is 0.080%, further preferably is 0.060%, further preferably is 0.040%, further preferably is 0.030%, further preferably is 0.025%, and further preferably is 0.020%.

In the present embodiment, the content of Al means the content of acid-soluble Al (sol. Al).

B: 0.0010 to 0.0050%

Boron (B) segregates to grain boundaries during use under a high-temperature corrosive environment of 600 to 700°C, and thereby increases the grain boundary strength. As a result, under a high-temperature corrosive environment of 600 to 700°C, the high-temperature strength of the weld metal 20 increases. If the content of B is less than 0.0010%, the aforementioned advantageous effect will not be sufficiently obtained even if the contents of other elements are within the range of the present embodiment. On the other hand, if the content of B is more than 0.0050%, the weld hot cracking resistance of the weld metal 20 will decrease. Therefore, the content of B is 0.0010 to 0.0050%.

A preferable lower limit of the content of B is 0.0011%, more preferably is 0.0012%, further preferably is 0.0015%, further preferably is 0.0020%, and further preferably is 0.0030%. If the content of B in the weld metal 20 is 0.0030% or more, in particular, excellent creep strength will be obtained in the welded joint 1.

A preferable upper limit of the content of B is 0.0045%, more preferably is 0.0040%, and further preferably is 0.0035%.

The balance of the chemical composition of the weld metal 20 of the austenitic stainless alloy welded joint 1 according to the present embodiment is Fe and impurities. Here, the term "impurities" means substances which, when forming the weld metal 20, are mixed in from the welding material that is the raw material or from the environment during welding, and which are not intentionally contained but are permitted within ranges within which the impurities do not adversely affect the weld metal 20.

[Optional elements]

The chemical composition of the weld metal 20 of the austenitic stainless alloy welded joint 1 of the present embodiment may further contain, in lieu of a part of Fe, one element or more selected from the group consisting of:

Cu: 0 to 5.00%,
W: 0 to 5.00%,
Co: 0 to 1.00%,
V: 0 to 1.00%,
Ta: 0 to 0.20%,
Hf: 0 to 0.20%,
Ca: 0 to 0.010%,
Mg: 0 to 0.010%, and
rare earth metal: 0 to 0.100%.
Hereunder, these optional elements are described.

[First group: Regarding Cu, W, and Co]

The chemical composition of the weld metal 20 according to the present embodiment may further contain one element or more selected from the group consisting of Cu, W, and Co in lieu of a part of Fe. Each of these elements increases the creep strength of the weld metal 20.

Cu: 0 to 5.00%

Copper (Cu) is an optional element, and does not have to be contained. That is, Cu may be 0%. In a case where Cu is contained, that is, when the content of Cu is more than 0%, during use under a high-temperature corrosive environment of 600 to 700°C, Cu precipitates as a Cu phase in the grains, and increases the high-temperature strength of the weld metal 20 by precipitation strengthening. If even a small amount of Cu is contained, the aforementioned advantageous effect will be obtained to a certain extent. However, if the content of Cu is more than 5.00%, the weldability of the alloy will decrease. Therefore, the content of Cu is 0 to 5.00%.
A preferable lower limit of the content of Cu is 0.01%, more preferably is 0.05%, further preferably is 0.10%, further preferably is 0.50%, further preferably is 1.00%, further preferably is 2.00%, and further preferably is 2.50%.
A preferable upper limit of the content of Cu is 4.50%, more preferably is 4.00%, further preferably is 3.80%, further preferably is 3.70%, further preferably is 3.60%, further preferably is 3.50%, and further preferably is 1.90%.

W: 0 to 5.00%

Tungsten (W) is an optional element, and does not have to be contained. That is, W may be 0%. In a case where W is contained, that is, when the content of W is more than 0%, W dissolves in the matrix (parent phase) and increases the high-temperature strength of the weld metal 20. If even a small amount of W is contained, the aforementioned advantageous effect will be obtained to a certain extent. However, if the content of W is more than 5.00%, the stability of austenite will decrease, and the age-toughness of the weld metal 20 will decrease. Therefore, the content of W is 0 to 5.00%.
A preferable lower limit of the content of W is 0.01%, more preferably is 0.02%, further preferably is 0.05%, and further preferably is 0.10%.
A preferable upper limit of the content of W is 4.50%, more preferably is 4.00%, further preferably is 3.80%, and further preferably is 3.50%.

Co: 0 to 1.00%

Cobalt (Co) is an optional element, and does not have to be contained. That is, the content of Co may be 0%. In a case where Co is contained, that is, when the content of Co is more than 0%, Co stabilizes austenite and increases the high-temperature strength of the weld metal 20. If even a small amount of Co is contained, the aforementioned advantageous effect will be obtained to a certain extent. However, if the content of Co is more than 1.00%, the raw material cost will increase. Therefore, the content of Co is 0 to 1.00%.
A preferable lower limit of the content of Co is 0.01%, more preferably is 0.02%, further preferably is 0.03%, and further preferably is 0.10%.
A preferable upper limit of the content of Co is 0.90%, more preferably is 0.80%, further preferably is 0.60%, further preferably is 0.50%, and further preferably is 0.45%.

[Second group: Regarding V, Ta, and Hf]

The chemical composition of the weld metal 20 according to the present embodiment may further contain one element or more selected from the group consisting of V, Ta, and Hf in lieu of a part of Fe. Each of these elements is an optional element, and does not have to be contained. When contained, each of the elements V, Ta, and Hf increases the polythionic acid SCC resistance of the weld metal 20.

V: 0 to 1.00%

Vanadium (V) is an optional element, and does not have to be contained. That is, the content of V may be 0%. In a case where V is contained, that is, when the content of V is more than 0%, during use under a high-temperature corrosive environment of 600 to 700°C, V combines with C to form carbo-nitrides. As a result, dissolved C in the weld metal 20 decreases and the polythionic acid SCC resistance of the weld metal 20 increases. If even a small amount of V is contained, the aforementioned advantageous effect will be obtained to a certain extent. However, if the content of V is more than 1.00%, δ-ferrite will form and the age-toughness of the weld metal 20 will decrease. Therefore, the content of V is 0 to 1.00%.
A preferable lower limit of the content of V is 0.01%, more preferably is 0.05%, and further preferably is 0.10%.
A preferable upper limit of the content of V is 0.90%, more preferably is 0.80%, further preferably is 0.60%, further preferably is 0.40%, further preferably is 0.20%, further preferably is 0.15%, and further preferably is 0.10%.

Ta: 0 to 0.20%

Tantalum (Ta) is an optional element, and does not have to be contained. That is, the content of Ta may be 0%. In a case where Ta is contained, that is, when the content of Ta is more than 0%, during use under a high-temperature corrosive environment of 600 to 700°C, Ta combines with C to form carbo-nitrides. As a result, dissolved C in the weld metal 20 decreases and the polythionic acid SCC resistance of the weld metal 20 increases. If even a small amount of Ta is contained, the aforementioned advantageous effect will be obtained to a certain extent. However, if the content of Ta is more than 0.20%, δ-ferrite will form and the age-toughness of the weld metal 20 will decrease. Therefore, the content of Ta is 0 to 0.20%.
A preferable lower limit of the content of Ta in order to further effectively increase the polythionic acid SCC resistance is 0.01%, and more preferably is 0.02%.
A preferable upper limit of the content of Ta is 0.18%, more preferably is 0.16%, and further preferably is 0.14%.

Hf: 0 to 0.20%

Hafnium (Hf) is an optional element, and does not have to be contained. That is, the content of Hf may be 0%. In a case where Hf is contained, that is, when the content of Hf is more than 0%, during use under a high-temperature corrosive environment of 600 to 700°C, Hf combines with C to form carbo-nitrides. As a result, dissolved C in the weld metal 20 decreases and the polythionic acid SCC resistance of the weld metal 20 increases. If even a small amount of Hf is contained, the aforementioned advantageous effect will be obtained to a certain extent. However, if the content of Hf is more than 0.20%, δ-ferrite will form and the creep strength, toughness, and weldability of the weld metal 20 will decrease. Therefore, the content of Hf is 0 to 0.20%.
A preferable lower limit of the content of Hf is 0.01%, and more preferably is 0.02%.
A preferable upper limit of the content of Hf is 0.18%, more preferably is 0.16%, and further preferably is 0.14%.

[Third group: Regarding Ca, Mg, and rare earth metal]

The chemical composition of the weld metal 20 according to the present embodiment may further contain one element or more selected from the group consisting of Ca, Mg, and rare earth metal in lieu of a part of Fe. Each of these elements is an optional element, and does not have to be contained. When contained, Ca, Mg, and rare earth metal each increases the ductility of the weld metal 20.

Ca: 0 to 0.010%

Calcium (Ca) is an optional element, and does not have to be contained. That is, the content of Ca may be 0%. In a case where Ca is contained, that is, when the content of Ca is more than 0%, Ca immobilizes O (oxygen) and S (sulfur) as inclusions, and thereby increases the ductility of the weld metal 20. If even a small amount of Ca is contained, the aforementioned advantageous effect will be obtained to a certain extent. However, if the content of Ca is more than 0.010%, the ductility of the weld metal 20 will decrease. Therefore, the content of Ca is 0 to 0.010%.

A preferable lower limit of the content of Ca is more than 0%, more preferably is 0.001%, and further preferably is 0.002%.

A preferable upper limit of the content of Ca is 0.008%, more preferably is 0.006%, and further preferably is 0.004%.

Mg: 0 to 0.010%

Magnesium (Mg) is an optional element, and does not have to be contained. That is, the content of Mg may be 0%. In a case where Mg is contained, that is, when the content of Mg is more than 0%, Mg immobilizes O (oxygen) and S (sulfur) as inclusions, and thereby increases the ductility of the weld metal 20. If even a small amount of Mg is contained, the aforementioned advantageous effect will be obtained to a certain extent. However, if the content of Mg is more than 0.010%, the ductility of the weld metal 20 will decrease. Therefore, the content of Mg is 0 to 0.010%.

A preferable lower limit of the content of Mg is more than 0%, more preferably is 0.001%, and further preferably is 0.002%.

A preferable upper limit of the content of Mg is 0.008%, more preferably is 0.006%, and further preferably is 0.004%.

Rare earth metal: 0 to 0.100%

Rare earth metal (REM) is an optional element, and does not have to be contained. That is, the content of REM may be 0%. In a case where REM is contained, that is, when the content of REM is more than 0%, REM immobilizes O (oxygen) and S (sulfur) as inclusions, and thereby increases the ductility of the weld metal 20. If even a small amount of REM is contained, the aforementioned advantageous effect will be obtained to a certain extent. However, if the content of REM is more than 0.100%, the ductility of the weld metal 20 will decrease. Therefore, the content of REM is 0 to 0.100%.

A preferable lower limit of the content of REM is more than 0%, more preferably is 0.001%, and further preferably is 0.002%.

A preferable upper limit of the content of REM is 0.080%, and more preferably is 0.060%.

[(Feature 3) Regarding F1 in weld metal 20]

In the weld metal 20, in addition, F1 defined by Formula (1) is 2.30 or less.

$$F1 = 130B + 8C + 0.025Cr + 0.25Mn + 0.08Mo + 0.6Nb + 12P + 7.6S + 0.78Si + 0.012W \quad (1) \tag{1}$$

The content (mass%) of a corresponding element is substituted for each symbol of an element in Formula (1).

F1 is an index relating to the weld hot cracking resistance of the weld metal 20. The elements B, C, Cr, Mn, Mo, Nb, P, S, Si, and W each promote weld hot cracking during welding. If F1 that is composed of the contents of these elements is more than 2.30, even if the other features, that is, Feature 1, Feature 2, and Feature 4 are satisfied, the weld hot cracking resistance in the weld metal 20 will decrease.

If F 1 is 2.30 or less, on the precondition that Feature 1, Feature 2, and Feature 4 are satisfied, sufficient weld hot cracking resistance will be obtained in the weld metal 20. Therefore, F1 is 2.30 or less.

A preferable upper limit of F1 is 2.28, more preferably is 2.25, further preferably is 2.22, further preferably is 2.20, further preferably is 2.18, further preferably is 2.15, further preferably is 2.10, and further preferably is 2.05. Note that, F1 is a value (a value to the hundredths place) obtained by rounding off the thousandths place of the obtained value.

[(Feature 4) Regarding F2 in weld metal 20]

In a cross section of the weld metal that is perpendicular to the extending direction of the weld metal 20, when a square region of 1 mm × 1 mm that is a width center portion at the surface of the weld metal and is a thickness center portion of the weld metal is partitioned into minute square sections of 100 $\mu$m × 100 $\mu$m and the content of Mo in percent by mass in each minute square section is determined, and an arithmetic average value of all of the contents of Mo obtained is defined as $[Mo]_{AVE}$, an arithmetic average value of contents of Mo that are higher than $[Mo]_{AVE}$ among all of the contents of Mo obtained is defined as $[Mo]_H$, and an arithmetic average value of contents of Mo that are lower than $[Mo]_{AVE}$ among all of the contents of Mo obtained is defined as $[Mo]_L$, F2 defined by Formula (2) is 2.5 or less.

$$F2 = [Mo]_H/[Mo]_L \quad (2)$$

F2 is an index relating to the degree of Mo segregation in the square region of the weld metal 20. In the austenitic stainless alloy welded joint 1 of the present embodiment, in order to increase the naphthenic acid corrosion resistance, the content of Mo is high. Although Mo increases the naphthenic acid corrosion resistance, Mo tends to segregate to grain boundaries.

$[Mo]_H$ means the content of Mo in regions where the content of Mo is higher than the average value $[Mo]_{AVE}$ in the square region. That is, $[Mo]_H$ is an index of the content of segregated Mo. On the other hand, $[Mo]_L$ means the content of Mo in regions where the content of Mo is lower than the average value $[Mo]_{AVE}$ in the square region. That is, $[Mo]_L$ is an index of the content of Mo in regions other than regions where Mo is segregated.

When F2 is high, it means that the degree of segregation of Mo in the square region is high. That is, it is considered that the degree of Mo segregation at grain boundaries is high. In this case, the Mo concentration at the grain boundaries is high, and the Mo concentration within the grains is low. Consequently, the strength at the grain boundaries becomes excessively high compared to the strength within the grains. That is, a difference between the grain boundary strength and the transgranular strength in the weld metal 20 will be large. As a result, naphthenic acid corrosion resistance and age-toughness will not be sufficiently obtained.

When F2 is 2.5 or less, the degree of segregation of Mo in the square region is sufficiently suppressed. Consequently, the difference between the grain boundary strength and the transgranular strength in the weld metal 20 is small. As a result, sufficient naphthenic acid corrosion resistance and sufficient age-toughness are obtained.

A preferable upper limit of F2 is 2.4, more preferably is 2.3, further preferably is 2.2, further preferably is 2.1, further preferably is 2.0, further preferably is 1.8, further preferably is 1.6, and further preferably is 1.4.

[F2 measurement method]

F2 can be measured by the following method.

Referring to FIG. 5, in a cross section of the weld metal 20 that is perpendicular to the weld metal extending direction L, a region P that is a width center portion at the surface of the weld metal 20 and is a thickness center portion of the weld metal 20 is specified. In addition, a test specimen having a surface (observation surface) including a square region of 1 mm × 1 mm is taken in the region P. The observation surface of the test specimen is mirror polished. An arbitrary square region is selected from the observation surface after the mirror polishing. The selected square region is subjected to surface analysis using a field emission-electron probe micro-analyzer (FE-EPMA). Specifically, the square region is partitioned into minute square sections of 100 $\mu$m × 100 $\mu$m. Each minute square section is then subjected to elemental analysis. The accelerating voltage is to be set to 15 kV, the irradiation current to 400 nA, the beam diameter to 2 $\mu$m, and the integration time to 0.1 seconds. Mo is set as the element to be measured, and the content of Mo in percent by mass in each minute square section is determined. The arithmetic average value of all of the contents of Mo (mass%) obtained is defined as $[Mo]_{AVE}$.

Among all of the contents of Mo that are measured, minute square sections in which the content of Mo is higher than $[Mo]_{AVE}$, and minute square sections in which the content of Mo is lower than $[Mo]_{AVE}$ are separated. Minute square sections in which the content of Mo is the same as $[Mo]_{AVE}$ are excluded.

The arithmetic average value of the contents of Mo of the minute square sections in which the content of Mo is higher than $[Mo]_{AVE}$ is defined as $[Mo]_H$. The arithmetic average value of the contents of Mo of the minute square sections in which the content of Mo is lower than $[Mo]_{AVE}$ is defined as $[Mo]_L$. Based on the obtained $[Mo]_H$ and $[Mo]_L$, F2 is determined using Formula (2).

[Regarding austenitic stainless alloy welding material of present embodiment]

An austenitic stainless alloy welding material having a chemical composition consisting of, in mass%, C: 0.020% or less, Si: 0.01 to 1.00%, Mn: 0.20 to 2.00%, P: 0.030% or less, S: 0.010% or less, Cr: 16.0 to 25.0%, Ni: 15.0 to 40.0%, Mo: 2.5 to 5.0%, Nb: 0.10 to 2.00%, N: 0.05 to 0.30%, sol. Al: 0.001 to 0.100%, B: 0.0010 to 0.0050%, Cu: 0 to 5.00%, W: 0 to 5.00%, Co: 0 to 1.00%, V: 0 to 1.00%, Ta: 0 to 0.20%, Hf: 0 to 0.20%, Ca: 0 to 0.010%, Mg: 0 to 0.010%, and rare earth metal: 0 to 0.100%, with the balance being Fe and impurities is used as the welding material of the weld metal 20 of the austenitic stainless alloy welded joint 1 of the present embodiment. The actions, the preferable lower limit, and the preferable upper limit of each element in the chemical composition of the austenitic stainless alloy welding material are the same as the actions, the preferable lower limit, and the preferable upper limit of each of the corresponding elements in the chemical composition of the weld metal 20.

The weld metal 20 is formed by welding an austenitic stainless alloy welding material having the above chemical composition to the base metal 10 by a welding method that is described later. In a case where the chemical composition of the austenitic stainless alloy welding material deviates from the aforementioned range, the weld metal 20 cannot be formed.

[Advantageous effects of austenitic stainless alloy welded joint 1]

The austenitic stainless alloy welded joint 1 of the present embodiment satisfies Feature 1 to Feature 4. Therefore, in the weld metal 20, sufficient weld hot cracking resistance is obtained, sufficient polythionic acid SCC resistance is obtained, sufficient naphthenic acid corrosion resistance is obtained, and sufficient age-toughness is obtained.

[Production method]

One example of a method for producing the austenitic stainless alloy welded joint 1 of the present embodiment will now be described. The method for producing the austenitic stainless alloy welded joint 1 that is described hereunder is one example for producing the austenitic stainless alloy welded joint 1 of the present embodiment. Accordingly, the austenitic stainless alloy welded joint 1 composed as described above may also be produced by a production method other than the production method described hereunder. However, the production method described hereunder is a preferable example of the method for producing the austenitic stainless alloy welded joint 1 of the present embodiment.

One example of the production method includes the following processes.

(Process 1) Base metal preparation process
(Process 2) Welding process

Processes 1 and 2 are described hereunder.

[(Process 1) Base metal preparation process]

In the base metal preparation process, a base metal 10 that satisfies Feature 1 is prepared. The shape of the base metal 10 is not particularly limited. As mentioned above, the base metal 10 may be an alloy plate or may be an alloy pipe. The base metal 10 may be a bar or may be a section shape steel.

When producing the base metal 10, the base metal preparation process includes the following processes.

(Process 11) Preparation process
(Process 12) Hot working process
(Process 13) Cold working process
(Process 14) Solution treatment process

Processes 11 to 14 are described hereunder.

[(Process 11) Preparation process]

A molten alloy satisfying Feature 1 is produced. For example, the molten alloy is produced using an electric furnace, an AOD (Argon Oxygen Decarburization) furnace, or a VOD (Vacuum Oxygen Decarburization) furnace. As necessary, the produced molten alloy is subjected to a well-known degassing treatment. The molten alloy subjected to the degassing treatment is used to produce a starting material. The method for producing the starting material is, for example, a continuous casting process. A continuous casting material (starting material) is produced by the continuous casting process. The continuous casting material is, for example, a slab, a bloom, or a billet. The molten alloy may also be used to produce an ingot by an ingot-making process.

[(Process 12) Hot working process]

The prepared starting material (continuous casting material or ingot) is subjected to hot working to produce the base metal. For example, the starting material is subjected to hot rolling to produce an alloy plate as the base metal 10. Alternatively, the starting material is subjected to hot extrusion or hot piercing-rolling or the like to produce an alloy pipe as the base metal 10. The specific method for performing the hot working is not particularly limited, and it suffices to perform hot working according to the shape of the end product. The working end temperature of the hot working is, for example, 1000°C or more, and more preferably is 1050°C or more. As used herein, the term "working end temperature" means the temperature of the base metal 10 immediately after the final hot working is completed.

[(Process 13) Cold working process]

As necessary, the base metal after the hot working process may be subjected to cold working. If the base metal 10 is an alloy pipe, the cold working is, for example, cold drawing or cold rolling. If the base metal 10 is an alloy plate, the cold working is, for example, cold rolling or the like.

[(Process 14) Solution treatment process]

After the hot working process, or after the cold working process, as necessary, the base metal 10 may be subjected to a solution treatment. In the solution treatment process, the structure is homogenized and carbo-nitrides are dissolved. A preferable solution treatment temperature is 1000 to 1250°C. Although not particularly limited, a holding time at the aforementioned solution treatment temperature is, for example, 2 minutes to 60 minutes.

[(Process 2) Welding process]

The prepared base metal 10 is subjected to welding to produce the austenitic stainless alloy welded joint 1. A bevel is formed at an end of the base metal 10. Two of the base metals 10 in which the bevel is formed are prepared. The bevels of the prepared base metals 10 are butted together. Next, welding is performed on the pair of beveled portions that are butted together using an austenitic stainless alloy welding material having the chemical composition described above to thereby form the weld metal 20 having the chemical composition described above.
Note that, the austenitic stainless alloy welding material is produced by the following method. A molten alloy having the chemical composition described above is produced. For example, the aforementioned molten alloy is produced using an electric furnace, an AOD furnace, or a VOD furnace. As necessary, the produced molten alloy is subjected to a well-known degassing treatment. A starting material (a continuous casting material or an ingot) is produced from the molten alloy that underwent the degassing treatment. The starting material is subjected to well-known hot working to produce an austenitic stainless alloy welding material in a wire shape.
The method for welding the base metal 10 using the austenitic stainless alloy welding material is, for example, gas tungsten arc welding (GTAW), shielded metal arc welding (SMAW), flux cored arc welding (FCAW), gas metal arc welding (GMAW), or submerged arc welding (SAW).
In the welding process, if the base metals 10 are alloy plates, for example, the bevel is formed at the end face or side face of each alloy plate. If the base metals 10 are alloy pipes, the bevel is formed at a leading end of the pipe in the axial direction of the alloy pipe. If the base metals 10 are alloy pipes, for example, the austenitic stainless alloy welded joint 1 is formed by performing peripheral welding.
In the welding process, welding is performed so as to satisfy the following conditions.

(Condition 1) Heat input: 3.0 kJ/mm or less
(Condition 2) Interlayer temperature: 150°C or less
(Condition 3) When the cooling rate at 1300°C during welding is defined as "CR (°C/sec)", and the welding speed is defined as "V (mm/sec)", FA defined by the following equation is to be made greater than 0.60.

$$FA = V - 0.0056 \times (CR/V)$$

Here, the term "interlayer temperature" means, in multi-layer welding, the surface temperature (°C) of the layer of the weld zone immediately before starting welding of the next layer. "The interlayer temperature is 150°C or less" means that each interlayer temperature after each layer is formed is 150°C or less. That is, the interlayer temperature of Condition 2 means that the maximum temperature of one or a plurality of interlayer temperatures is 150°C or less.
FA is an index for suppressing Mo segregation. The higher the welding speed V becomes, or the smaller a temperature gradient (= CR/V) in the extending direction of the weld metal 20 is, the greater the degree to which Mo segregation is suppressed during solidification of the weld metal 20. If FA is made greater than 0.60, Mo segregation in the weld metal 20 can be sufficiently suppressed.
Here, the cooling rate CR at 1300°C can be measured by the following method. During welding in the welding process, a thermocouple is inserted into the molten pool to obtain a cooling curve. The cooling rate CR (°C/sec) at 1300°C is determined from the obtained cooling curve.
Further, in the case of automatic welding, the welding speed V (mm/sec) is determined based on the setting of the movement speed of the welding torch of the welding device, and in the case of peripheral welding of an alloy pipe, the welding speed V (mm/sec) is determined based on the setting of the movement speed of the welding device or the positioner (rotary device).

If the aforementioned Condition 1 to Condition 3 are satisfied, the weld metal 20 that satisfies Feature 2 to Feature 4 can be formed.

An austenitic stainless alloy welded joint satisfying Feature 1 to Feature 4 can be produced by the above production process. Note that, a method for producing the austenitic stainless alloy welded joint 1 according to the present embodiment is not limited to the production method described above. As long as the austenitic stainless alloy welded joint 1 satisfying Feature 1 to Feature 4 can be produced, the austenitic stainless alloy welded joint 1 may also be produced by another method.

Hereunder, the advantageous effects of the austenitic stainless alloy welded joint of the present embodiment are described more specifically by way of examples. The conditions adopted in the following examples are one example of conditions adopted for confirming the feasibility and advantageous effects of the austenitic stainless alloy welded joint of the present embodiment. Accordingly, the austenitic stainless alloy welded joint of the present embodiment is not limited to this one example of conditions.

EXAMPLES

[Production of austenitic stainless alloy welded joint]

[Production of base metal]

Molten alloys for base metals having the chemical compositions shown in Table 1-1 and Table 1-2 were produced.

[Table 1-1]

TABLE 1-1

| Base metal number | Chemical composition (unit is mass%; balance is Fe and impurities) | | | | | | | | | | |
|---|---|---|---|---|---|---|---|---|---|---|---|
| | C | Si | Mn | P | S | Cr | Ni | Mo | Nb | N | sol.Al |
| A | 0.010 | 0.26 | 1.67 | 0.024 | 0.001 | 17.3 | 14.4 | 2.8 | 0.27 | 0.10 | 0.005 |
| B | 0.012 | 0.33 | 1.54 | 0.015 | 0.001 | 21.2 | 15.5 | 3.2 | 0.25 | 0.15 | 0.010 |
| C | 0.015 | 0.22 | 0.51 | 0.015 | 0.001 | 18.5 | 14.2 | 3.5 | 0.48 | 0.12 | 0.010 |
| D | 0.009 | 0.28 | 1.23 | 0.025 | 0.001 | 17.5 | 13.5 | 2.2 | 0.35 | 0.10 | 0.010 |
| E | 0.007 | 0.22 | 1.21 | 0.035 | 0.002 | 19.5 | 13.5 | 2.4 | 0.40 | 0.11 | 0.010 |
| F | 0.014 | 0.35 | 1.35 | 0.021 | 0.001 | 17.8 | 14.8 | 2.3 | 0.41 | 0.12 | 0.015 |
| G | 0.008 | 0.34 | 1.23 | 0.019 | 0.001 | 22.7 | 14.5 | 1.5 | 0.62 | 0.19 | 0.010 |
| H | 0.011 | 0.43 | 0.56 | 0.031 | 0.002 | 16.9 | 13.6 | 3.1 | 0.27 | 0.10 | 0.026 |
| I | 0.055 | 0.29 | 0.85 | 0.022 | 0.001 | 18.1 | 12.5 | 1.3 | 0.42 | 0.11 | 0.007 |
| J | 0.006 | 0.25 | 1.21 | 0.021 | 0.001 | 16.8 | 14.3 | 1.5 | 0.28 | 0.10 | 0.030 |
| K | 0.007 | 0.42 | 0.87 | 0.023 | 0.001 | 17.6 | 13.4 | - | 0.32 | 0.10 | 0.014 |
| L | 0.020 | 0.10 | 0.40 | 0.020 | 0.001 | 18.1 | 18.5 | 3.0 | 0.31 | 0.18 | 0.015 |
| M | 0.015 | 0.51 | 1.55 | 0.024 | 0.001 | 18.5 | 13.1 | 3.9 | 0.55 | 0.15 | 0.005 |
| N | 0.015 | 0.85 | 1.85 | 0.015 | 0.001 | 18.5 | 25.5 | 4.5 | 0.85 | 0.22 | 0.005 |

[Table 1-2]

TABLE 1-2

| Base metal number | Chemical composition (unit is mass%; balance is Fe and impurities) | | | | | | | | | |
|---|---|---|---|---|---|---|---|---|---|---|
| | B | Cu | W | Co | V | Ta | Hf | Ca | Mg | REM |
| A | - | - | - | - | - | - | - | - | - | - |
| B | 0.0035 | - | - | - | - | 0.10 | - | - | - | - |
| C | 0.0024 | - | - | - | - | - | - | - | - | - |
| D | 0.0031 | - | - | 0.50 | - | - | - | - | - | - |
| E | 0.0025 | 2.50 | 1.00 | - | - | - | - | 0.003 | - | - |
| F | 0.0035 | - | - | - | - | - | - | - | 0.002 | - |
| G | 0.0031 | - | - | - | 0.10 | - | - | - | - | - |
| H | 0.0025 | 0.10 | - | - | 0.10 | - | - | 0.003 | - | - |
| I | 0.0041 | - | - | - | - | - | - | - | - | - |
| J | 0.0100 | 3.50 | - | - | - | - | - | - | - | - |
| K | 0.0025 | - | - | - | - | - | - | - | - | - |
| L | 0.0030 | - | - | - | - | - | 0.10 | - | - | - |
| M | 0.0032 | - | - | - | - | - | - | - | - | 0.050 |
| N | 0.0025 | - | 3.50 | - | - | - | - | - | - | - |

Specifically, each molten alloy was used to produce an ingot with an outer diameter of 120 mm and a weight of 30 kg. Each ingot was subjected to hot forging to produce an alloy plate with a thickness of 30 mm. Further, hot rolling was performed to obtain an alloy plate with a thickness of 15 mm. The working end temperature during hot rolling was 1050°C or more for each of the alloy plates. The alloy plate after hot rolling was subjected to a solution treatment. For each of the alloy plates, the solution treatment temperature was 1150°C, and the solution treatment time was 10 minutes. The base metal after the solution treatment was water-cooled. By performing the above production process, alloy plates (base metals) having a thickness of 15 mm, a width of 50 mm, and a length of 100 mm were produced.

[Production of welding material]

Welding materials having the chemical compositions shown in Table 2-1 and Table 2-2 were prepared. In the chemical composition of each welding material number, the balance other than the elements listed in Table 2-1 and Table 2-2 was Fe and impurities.

[Table 2-1]

TABLE 2-1

| Welding material number | Chemical composition (unit is mass%; balance is Fe and impurities) | | | | | | | | | | |
|---|---|---|---|---|---|---|---|---|---|---|---|
| | C | Si | Mn | P | S | Cr | Ni | Mo | Nb | N | sol.Al |
| S | 0.009 | 0.26 | 1.46 | 0.004 | 0.001 | 18.0 | 17.8 | 4.3 | 0.26 | 0.19 | 0.010 |
| T | 0.009 | 0.27 | 1.48 | 0.005 | 0.001 | 18.1 | 25.5 | 4.2 | 0.30 | 0.20 | 0.011 |
| U | 0.010 | 0.10 | 0.40 | 0.006 | 0.001 | 18.1 | 30.2 | 4.5 | 0.31 | 0.18 | 0.010 |
| V | 0.010 | 0.25 | 1.48 | 0.005 | 0.002 | 17.8 | 20.1 | - | 0.28 | 0.19 | 0.010 |
| W | 0.032 | 0.25 | 1.52 | 0.006 | 0.001 | 18.1 | 21.1 | 3.1 | 0.29 | 0.20 | 0.010 |
| X | 0.015 | 0.35 | 1.51 | 0.008 | 0.001 | 18.2 | 22.5 | 7.5 | 0.29 | 0.19 | 0.012 |
| Y | 0.010 | 0.10 | 0.40 | 0.006 | 0.001 | 18.1 | 14.5 | 4.5 | 0.31 | 0.18 | 0.010 |
| Z | 0.012 | 0.32 | 1.48 | 0.006 | 0.002 | 17.9 | 24.5 | 3.5 | 0.31 | 0.20 | 0.012 |
| AA | 0.009 | 0.35 | 1.21 | 0.025 | 0.001 | 17.5 | 16.5 | 4.8 | 0.35 | 0.15 | 0.010 |

(continued)

| Welding material number | Chemical composition (unit is mass%; balance is Fe and impurities) | | | | | | | | | | |
|---|---|---|---|---|---|---|---|---|---|---|---|
| | C | Si | Mn | P | S | Cr | Ni | Mo | Nb | N | sol.Al |
| BB | 0.008 | 0.75 | 0.51 | 0.006 | 0.001 | 24.5 | 30.8 | 4.3 | 0.62 | 0.23 | 0.010 |
| CC | 0.018 | 0.55 | 0.68 | 0.018 | 0.001 | 19.5 | 35.5 | 2.9 | 0.25 | 0.25 | 0.010 |
| DD | 0.020 | 0.10 | 0.40 | 0.020 | 0.001 | 18.1 | 18.5 | 3.0 | 0.31 | 0.18 | 0.015 |
| EE | 0.011 | 0.43 | 0.56 | 0.004 | 0.001 | 16.9 | 29.8 | 3.1 | 0.27 | 0.10 | 0.026 |
| FF | 0.014 | 0.35 | 1.35 | 0.021 | 0.001 | 17.9 | 30.7 | 4.4 | 0.41 | 0.12 | 0.015 |
| GG | 0.015 | 0.15 | 1.15 | 0.008 | 0.001 | 18.5 | 32.3 | 3.8 | 0.45 | 0.15 | 0.005 |
| HH | 0.009 | 0.10 | 0.41 | 0.006 | 0.001 | 18.0 | 30.1 | 4.0 | 0.27 | 0.19 | 0.009 |
| II | 0.010 | 0.05 | 0.42 | 0.005 | 0.001 | 17.6 | 29.8 | 3.7 | 1.85 | 0.18 | 0.011 |
| JJ | 0.008 | 0.92 | 1.85 | 0.004 | 0.007 | 22.5 | 38.5 | 3.5 | 0.15 | 0.18 | 0.015 |

[Table 2-2]

TABLE 2-2

| Welding material number | Chemical composition (unit is mass%; balance is Fe and impurities) | | | | | | | | | |
|---|---|---|---|---|---|---|---|---|---|---|
| | B | Cu | W | Co | V | Ta | Hf | Ca | Mg | REM |
| S | 0.0031 | - | 3.92 | - | - | - | - | - | - | - |
| T | 0.0028 | - | - | - | - | - | - | - | - | - |
| U | 0.0030 | - | - | - | - | - | - | - | - | - |
| V | 0.0030 | - | - | - | - | - | - | - | - | - |
| W | 0.0032 | - | - | - | - | - | - | - | - | - |
| X | 0.0033 | 3.95 | - | - | - | - | - | - | - | - |
| Y | 0.0030 | - | - | - | - | - | - | - | - | - |
| Z | 0.0075 | - | - | - | - | - | - | - | - | - |
| AA | 0.0031 | - | - | 0.50 | - | - | - | - | - | - |
| BB | 0.0022 | - | - | - | 0.10 | - | - | - | - | - |
| CC | 0.0035 | - | - | - | - | 0.10 | - | - | - | - |
| DD | 0.0030 | - | - | - | - | - | 0.10 | - | - | - |
| EE | 0.0025 | - | - | - | - | - | - | 0.003 | - | - |
| FF | 0.0035 | - | - | - | - | - | - | - | 0.002 | - |
| GG | 0.0025 | - | - | - | - | - | - | - | - | 0.050 |
| HH | 0.0028 | 1.55 | - | - | - | - | - | - | - | - |
| II | 0.0015 | - | - | - | - | - | - | - | - | - |
| JJ | 0.0011 | - | - | - | - | - | - | - | - | - |

Each molten alloy was used to produce an ingot with an outer diameter of 120 mm and a weight of 30 kg. Each ingot was subjected to hot forging and hot rolling, cold rolling, and a heat treatment by well-known methods to produce a weld wire (an austenitic stainless alloy welding material) with an outer diameter of 1.2 mm.

# EP 4 534 714 A1

[Production of austenitic stainless alloy welded joint]

The base metals described in Table 1-1 and Table 1-2 and the welding materials described in Table 2-1 and Table 2-2 were used to produce austenitic stainless alloy welded joints by the following production method.

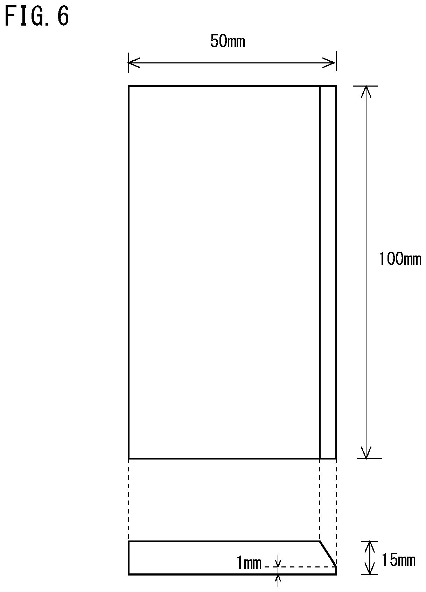

As the base metals described in Table 1-1 and Table 1-2, two alloy plates illustrated in FIG. 6 were fabricated by machining. In FIG. 6, numerical values suffixed with the characters "mm" indicate the dimensions (in units of mm) of the alloy plate that is the base metal. Each alloy plate had a groove face at a side face extending in the longitudinal direction. The groove face was a V-type groove face having a groove angle of 30° and a root thickness of 1 mm.

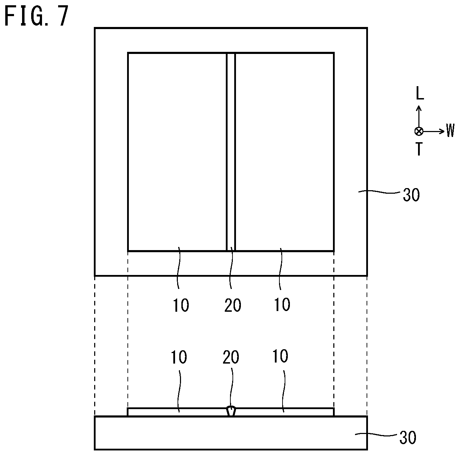

As illustrated in FIG. 7, a restraint plate 30 was prepared. A plate with a thickness of 25 mm, a width of 200 mm, and a length of 200 mm, and which had a chemical composition corresponding to the chemical composition of "SM400C" described in JIS G 3106 (2008) was utilized as the restraint plate 30.

The two base metals (plate materials) 10 were arranged on the restraint plate 30. At this time, the groove faces of the two base metals 10 were butted together. After arranging the two base metals 10, the circumferences of the base metals 10 were restraint-welded using a covered electrode. The covered electrode had a chemical composition corresponding to the chemical composition of "ENiCrMo-3" defined in JIS Z 3224 (2010).

After the circumferences of the base metals 10 were restraint-welded, the welding materials described in Table 2-1 and Table 2-2 were used to perform multi-layer welding by gas tungsten arc welding (GTAW) to form weld metals. For each test number, the heat input (kJ/mm) during welding, the maximum temperature (°C) of the interlayer temperature in each layer in the multi-layer welding, the welding speed V (°C/sec), the cooling rate CR (mm/sec) at 1300°C, and FA were as shown in the column "Heat input (kJ/mm)", the column "Interlayer temperature (°C)", the column "Welding speed V (mm/sec)", and the column "Cooling rate CR (°C/sec)" of the column "Welding conditions", and the column "FA" in Table 4. An austenitic stainless alloy welded joint of each weld metal number was produced by the above production process.

[Analysis of chemical composition of weld metal]

The chemical composition at a location which was at the width-center position and also the thickness-center position of the weld metal of the austenitic stainless alloy welded joint of each weld metal number was measured by a well-known composition analysis method in accordance with JIS G0321: 2017. Specifically, a machined chip was taken from a region P that was the width center portion of the weld metal and was also the thickness center portion of the weld metal using a drill. The taken machined chip was dissolved in acid to obtain a liquid solution. The liquid solution was subjected to ICP-AES (Inductively Coupled Plasma Atomic Emission Spectrometry) to perform elemental analysis of the chemical composition. The content of C and the content of S were determined by a well-known high-frequency combustion method (combustion-infrared absorption method). The content of N and the content of O were determined using a well-known inert gas fusion-thermal conductivity method.

The chemical compositions of the weld metals that were obtained are shown in Table 3-1 and Table 3-2.

[Table 3-1]

TABLE 3-1

| Weld metal number | Base metal | Welding material | Chemical composition (unit is mass%; balance is Fe and impurities) | | | | | | | | | | |
|---|---|---|---|---|---|---|---|---|---|---|---|---|---|
| | | | C | Si | Mn | P | S | Cr | Ni | Mo | Nb | N | sol.Al |
| 1 | A | S | 0.009 | 0.26 | 1.52 | 0.012 | 0.001 | 17.5 | 17.0 | 3.3 | 0.26 | 0.15 | 0.008 |
| 2 | A | T | 0.009 | 0.26 | 1.52 | 0.014 | 0.001 | 17.6 | 21.2 | 3.6 | 0.28 | 0.15 | 0.008 |
| 3 | A | U | 0.010 | 0.18 | 1.11 | 0.015 | 0.001 | 17.8 | 23.2 | 3.5 | 0.29 | 0.14 | 0.007 |
| 4 | B | S | 0.010 | 0.28 | 1.50 | 0.008 | 0.001 | 19.2 | 17.1 | 3.8 | 0.25 | 0.16 | 0.010 |
| 5 | B | T | 0.010 | 0.28 | 1.50 | 0.009 | 0.001 | 19.5 | 22.1 | 3.6 | 0.28 | 0.17 | 0.010 |
| 6 | C | T | 0.012 | 0.25 | 1.12 | 0.010 | 0.001 | 18.3 | 20.5 | 3.8 | 0.40 | 0.15 | 0.010 |
| 7 | C | U | 0.012 | 0.14 | 0.43 | 0.010 | 0.001 | 18.1 | 24.3 | 4.1 | 0.38 | 0.14 | 0.010 |
| 8 | D | S | 0.009 | 0.27 | 1.40 | 0.012 | 0.001 | 17.8 | 16.5 | 3.6 | 0.31 | 0.14 | 0.010 |
| 9 | D | T | 0.009 | 0.28 | 1.30 | 0.012 | 0.001 | 17.8 | 20.2 | 3.5 | 0.31 | 0.13 | 0.010 |
| 10 | E | S | 0.008 | 0.24 | 1.35 | 0.018 | 0.002 | 18.5 | 16.1 | 3.6 | 0.31 | 0.14 | 0.010 |
| 11 | F | S | 0.010 | 0.28 | 1.40 | 0.012 | 0.001 | 17.9 | 15.8 | 3.4 | 0.33 | 0.12 | 0.010 |
| 12 | G | S | 0.009 | 0.28 | 1.35 | 0.012 | 0.001 | 20.2 | 16.8 | 3.1 | 0.42 | 0.17 | 0.010 |

(continued)

| Weld metal number | Base metal | Welding material | Chemical composition (unit is mass%; balance is Fe and impurities) | | | | | | | | | | |
|---|---|---|---|---|---|---|---|---|---|---|---|---|---|
| | | | C | Si | Mn | P | S | Cr | Ni | Mo | Nb | N | sol.Al |
| 13 | H | S | 0.010 | 0.35 | 1.10 | 0.017 | 0.002 | 17.4 | 15.8 | 3.5 | 0.27 | 0.13 | 0.018 |
| 14 | H | T | 0.010 | 0.32 | 1.22 | 0.015 | 0.001 | 17.5 | 20.2 | 3.5 | 0.28 | 0.14 | 0.015 |
| 15 | L | DD | 0.018 | 0.11 | 0.39 | 0.020 | 0.001 | 18.1 | 18.5 | 2.9 | 0.31 | 0.18 | 0.015 |
| 16 | M | GG | 0.015 | 0.25 | 1.23 | 0.013 | 0.001 | 18.5 | 28.8 | 3.8 | 0.51 | 0.15 | 0.005 |
| 17 | A | AA | 0.009 | 0.31 | 1.35 | 0.024 | 0.001 | 17.4 | 16.2 | 4.3 | 0.31 | 0.12 | 0.008 |
| 18 | C | BB | 0.009 | 0.63 | 0.51 | 0.007 | 0.001 | 23.0 | 28.6 | 3.9 | 0.52 | 0.19 | 0.008 |
| 19 | C | CC | 0.017 | 0.45 | 0.61 | 0.016 | 0.001 | 19.2 | 33.8 | 3.2 | 0.28 | 0.21 | 0.010 |
| 20 | C | EE | 0.013 | 0.41 | 0.53 | 0.008 | 0.001 | 17.3 | 28.5 | 3.2 | 0.33 | 0.11 | 0.017 |
| 21 | C | FF | 0.014 | 0.31 | 1.21 | 0.017 | 0.001 | 18.1 | 28.3 | 4.1 | 0.42 | 0.10 | 0.012 |
| 22 | E | HH | 0.009 | 0.12 | 0.56 | 0.008 | 0.001 | 18.3 | 29.6 | 3.9 | 0.29 | 0.14 | 0.001 |
| 23 | N | S | 0.010 | 0.37 | 1.52 | 0.005 | 0.001 | 18.2 | 22.3 | 4.3 | 0.39 | 0.18 | 0.005 |
| 24 | C | II | 0.011 | 0.06 | 0.45 | 0.005 | 0.001 | 17.8 | 29.5 | 3.5 | 1.75 | 0.14 | 0.010 |
| 25 | C | JJ | 0.009 | 0.76 | 1.75 | 0.004 | 0.005 | 22.2 | 36.5 | 3.5 | 0.18 | 0.15 | 0.011 |
| 26 | A | V | 0.010 | 0.25 | 1.52 | 0.012 | 0.001 | 17.5 | 18.1 | 1.1 | 0.27 | 0.14 | 0.008 |
| 27 | A | W | 0.023 | 0.25 | 1.56 | 0.015 | 0.001 | 17.8 | 18.5 | 2.9 | 0.29 | 0.14 | 0.008 |
| 28 | B | W | 0.024 | 0.29 | 1.55 | 0.010 | 0.001 | 19.2 | 18.3 | 3.1 | 0.27 | 0.16 | 0.010 |
| 29 | C | X | 0.015 | 0.28 | 1.01 | 0.010 | 0.001 | 18.3 | 18.8 | 6.5 | 0.33 | 0.13 | 0.011 |
| 30 | D | Y | 0.010 | 0.19 | 0.85 | 0.012 | 0.001 | 17.8 | 13.8 | 3.3 | 0.33 | 0.13 | 0.010 |
| 31 | E | V | 0.009 | 0.23 | 1.41 | 0.017 | 0.002 | 18.5 | 17.2 | 0.8 | 0.32 | 0.15 | 0.010 |
| 32 | E | X | 0.012 | 0.29 | 1.37 | 0.018 | 0.001 | 18.8 | 18.6 | 5.5 | 0.35 | 0.15 | 0.011 |
| 33 | F | Y | 0.012 | 0.23 | 0.91 | 0.014 | 0.001 | 17.9 | 14.5 | 3.4 | 0.35 | 0.15 | 0.010 |
| 34 | G | Z | 0.010 | 0.33 | 1.41 | 0.013 | 0.002 | 20.3 | 19.5 | 2.5 | 0.45 | 0.19 | 0.011 |
| 35 | H | U | 0.011 | 0.27 | 0.49 | 0.018 | 0.002 | 17.5 | 21.7 | 3.6 | 0.29 | 0.13 | 0.018 |
| 36 | I | U | 0.037 | 0.26 | 0.64 | 0.015 | 0.001 | 17.8 | 21.8 | 3.4 | 0.31 | 0.13 | 0.012 |
| 37 | J | U | 0.008 | 0.15 | 0.90 | 0.012 | 0.001 | 17.5 | 25.5 | 3.2 | 0.29 | 0.13 | 0.010 |
| 38 | K | T | 0.008 | 0.33 | 1.22 | 0.012 | 0.001 | 17.8 | 20.1 | 1.6 | 0.31 | 0.12 | 0.012 |
| 39 | E | FF | 0.013 | 0.33 | 1.32 | 0.028 | 0.002 | 18.3 | 28.5 | 4.2 | 0.41 | 0.12 | 0.013 |
| 40 | H | BB | 0.009 | 0.68 | 0.54 | 0.015 | 0.002 | 23.3 | 26.3 | 4.1 | 0.58 | 0.19 | 0.015 |
| 41 | C | U | 0.012 | 0.12 | 0.43 | 0.008 | 0.001 | 18.2 | 27.6 | 4.4 | 0.35 | 0.18 | 0.010 |
| 42 | B | CC | 0.015 | 0.42 | 0.89 | 0.016 | 0.001 | 19.8 | 33.5 | 2.9 | 0.25 | 0.19 | 0.010 |
| 43 | G | HH | 0.009 | 0.15 | 0.65 | 0.008 | 0.001 | 19.3 | 28.3 | 3.9 | 0.43 | 0.15 | 0.010 |
| 44 | C | T | 0.011 | 0.26 | 1.35 | 0.008 | 0.001 | 18.2 | 22.2 | 3.7 | 0.35 | 0.14 | 0.010 |

[Table 3-2]

TABLE 3-2

| Weld metal number | Base metal | Welding material | Chemical composition (unit is mass%; balance is Fe and impurities) | | | | | | | | | | F1 |
|---|---|---|---|---|---|---|---|---|---|---|---|---|---|
| | | | B | Cu | W | Co | V | Ta | Hf | Ca | Mg | REM | |
| 1 | A | S | 0.0018 | - | 1.52 | - | - | - | - | - | - | - | 1.92 |
| 2 | A | T | 0.0014 | - | - | - | - | - | - | - | - | - | 1.91 |
| 3 | A | U | 0.0015 | - | - | - | - | - | - | - | - | - | 1.78 |
| 4 | B | S | 0.0032 | - | 1.33 | - | - | 0.03 | - | - | - | - | 2.14 |
| 5 | B | T | 0.0030 | - | - | - | - | 0.05 | - | - | - | - | 2.12 |
| 6 | C | T | 0.0026 | - | - | - | - | - | - | - | - | - | 2.04 |
| 7 | C | U | 0.0027 | - | - | - | - | - | - | - | - | - | 1.80 |
| 8 | D | S | 0.0030 | - | 1.20 | 0.20 | - | - | - | - | - | - | 2.11 |
| 9 | D | T | 0.0030 | - | - | 0.22 | - | - | - | - | - | - | 2.07 |
| 10 | E | S | 0.0027 | 1.25 | 2.20 | - | - | - | - | 0.001 | - | - | 2.13 |
| 11 | F | S | 0.0033 | - | 1.20 | - | - | - | - | - | 0.001 | - | 2.16 |
| 12 | G | S | 0.0030 | - | 1.05 | - | 0.04 | - | - | - | - | - | 2.19 |
| 13 | H | S | 0.0029 | 0.05 | 1.22 | - | 0.04 | - | - | 0.001 | - | - | 2.12 |
| 14 | H | T | 0.0027 | 0.03 | - | - | 0.04 | - | - | 0.001 | - | - | 2.06 |
| 15 | L | DD | 0.0030 | - | - | - | - | - | 0.10 | - | - | - | 1.84 |
| 16 | M | GG | 0.0028 | - | - | - | - | - | - | - | - | 0.050 | 2.22 |
| 17 | A | AA | 0.0025 | - | - | 0.43 | - | - | - | - | - | - | 2.24 |
| 18 | A | BB | 0.0022 | - | - | - | 0.08 | - | - | - | - | - | 2.27 |
| 19 | C | CC | 0.0031 | - | - | - | - | 0.08 | - | - | - | - | 2.15 |
| 20 | C | EE | 0.0024 | - | - | - | - | - | - | 0.002 | - | - | 1.86 |
| 21 | C | FF | 0.0029 | - | - | - | - | - | - | - | 0.001 | - | 2.28 |
| 22 | E | HH | 0.0027 | 1.83 | 0.35 | - | - | - | - | 0.001 | - | - | 1.71 |
| 23 | N | S | 0.0028 | - | 3.72 | - | - | - | - | - | - | - | 2.26 |
| 24 | C | II | 0.0015 | - | - | - | - | - | - | - | - | - | 2.28 |
| 25 | C | JJ | 0.0011 | - | - | - | - | - | - | - | - | - | 2.27 |
| 26 | A | V | 0.0018 | - | - | - | - | - | - | - | - | - | 1.73 |
| 27 | A | W | 0.0022 | - | - | - | - | - | - | - | - | - | 2.09 |
| 28 | B | W | 0.0031 | - | - | - | - | 0.03 | - | - | - | - | 2.23 |
| 29 | C | X | 0.0030 | 1.98 | - | - | - | - | - | - | - | - | 2.28 |
| 30 | D | Y | 0.0030 | - | - | 0.21 | - | - | - | - | - | - | 1.89 |
| 31 | E | V | 0.0027 | 1.25 | 0.30 | - | - | - | - | 0.001 | - | - | 1.90 |
| 32 | E | X | 0.0030 | 3.23 | 0.42 | - | - | - | - | 0.001 | - | - | 2.40 |
| 33 | F | Y | 0.0032 | - | - | - | - | - | - | - | 0.001 | - | 2.02 |
| 34 | G | Z | 0.0055 | - | - | - | 0.05 | - | - | - | - | - | 2.55 |
| 35 | H | U | 0.0027 | 0.05 | - | - | 0.03 | - | - | 0.001 | - | - | 1.90 |
| 36 | I | U | 0.0028 | - | - | - | - | - | - | - | - | - | 2.11 |
| 37 | J | U | 0.0071 | 1.45 | - | - | - | - | - | - | - | - | 2.35 |
| 38 | K | T | 0.0026 | - | - | - | - | - | - | - | - | - | 1.88 |

(continued)

| Weld metal number | Base metal | Welding material | Chemical composition (unit is mass%; balance is Fe and impurities) | | | | | | | | | | F1 |
|---|---|---|---|---|---|---|---|---|---|---|---|---|---|
| | | | B | Cu | W | Co | V | Ta | Hf | Ca | Mg | REM | |
| 39 | E | FF | 0.0032 | 1.20 | 0.30 | - | - | - | - | 0.001 | 0.001 | - | 2.50 |
| 40 | H | BB | 0.0023 | 0.05 | - | - | 0.10 | - | - | 0.001 | - | - | 2.49 |
| 41 | C | U | 0.0025 | - | - | - | - | - | - | - | - | - | 1.74 |
| 42 | B | CC | 0.0035 | - | - | - | - | 0.01 | - | - | - | - | 2.20 |
| 43 | G | HH | 0.0029 | 1.35 | - | - | 0.04 | - | - | - | - | - | 1.88 |
| 44 | C | T | 0.0025 | - | - | - | - | - | - | - | - | - | 2.02 |

[Evaluation tests]

The produced austenitic stainless alloy welded joints were subjected to the following tests.

(Test 1) F2 measurement test

(Test 2) Weld hot cracking resistance evaluation test

(Test 3) Polythionic acid SCC resistance evaluation test

(Test 4) Naphthenic acid corrosion resistance evaluation test

(Test 5) Age-toughness evaluation test

Tests 1 to 5 are described hereunder.

[(Test 1) F2 measurement test]

The value of F2 in the weld metal of each test number was determined based on the method described above in the section [F2 measurement method]. The determined F2 values are shown in Table 4.
[Table 4]

TABLE 4

| Weld metal number | Welding conditions | | | | Base metal | Welding material | FA | F2 | Weld hot cracking resistance | Polythionic acid SCC resistance | Naphthenic acid corrosion resistance | Age-toughness | Remarks |
|---|---|---|---|---|---|---|---|---|---|---|---|---|---|
| | Heat input (kJ/mm) | Interlayer temperature (°C) | Welding speed V (mm/sec) | Cooling rate CR (°C/sec) | | | | | | | | | |
| 1 | 1.2 | 100 | 1.67 | 218 | A | S | 0.93 | 1.3 | E | E | 0.007 | 85 | Inventive example of present invention |
| 2 | 1.2 | 100 | 1.67 | 218 | A | T | 0.93 | 1.4 | E | E | 0.006 | 110 | Inventive example of present invention |
| 3 | 1.2 | 100 | 1.67 | 218 | A | U | 0.93 | 1.3 | E | E | 0.006 | 115 | Inventive example of present invention |
| 4 | 1.5 | 150 | 1.67 | 158 | B | S | 1.14 | 1.5 | E | E | 0.007 | 85 | Inventive example of present invention |
| 5 | 1.5 | 150 | 1.67 | 158 | B | T | 1.14 | 1.5 | E | E | 0.008 | 82 | Inventive example of present invention |
| 6 | 0.8 | 100 | 1.67 | 297 | C | T | 0.67 | 1.2 | E | E | 0.007 | 112 | Inventive example of present invention |
| 7 | 0.8 | 100 | 1.67 | 297 | C | U | 0.67 | 1.2 | E | E | 0.005 | 83 | Inventive example of present invention |
| 8 | 2.0 | 150 | 1.67 | 119 | D | S | 1.27 | 1.7 | E | E | 0.006 | 120 | Inventive example of present invention |
| 9 | 2.0 | 150 | 1.67 | 119 | D | T | 1.27 | 1.8 | E | E | 0.007 | 105 | Inventive example of present invention |
| 10 | 2.0 | 150 | 1.67 | 119 | E | S | 1.27 | 1.7 | E | E | 0.007 | 83 | Inventive example of present invention |

(continued)

| Weld metal number | Welding conditions | | | | Base metal | Welding material | FA | F2 | Weld hot cracking resistance | Polythionic acid SCC resistance | Naphthenic acid corrosion resistance | Age-toughness | Remarks |
| --- | --- | --- | --- | --- | --- | --- | --- | --- | --- | --- | --- | --- | --- |
| | Heat input (kJ/mm) | Interlayer temperature (°C) | Welding speed V (mm/sec) | Cooling rate CR (°C/sec) | | | | | | | | | |
| 11 | 2.5 | 150 | 1.33 | 87 | F | S | 0.97 | 1.9 | E | E | 0.006 | 85 | Inventive example of present invention |
| 12 | 2.5 | 150 | 1.33 | 87 | G | S | 0.97 | 1.9 | E | E | 0.008 | 115 | Inventive example of present invention |
| 13 | 3.0 | 150 | 1.17 | 79 | H | S | 0.79 | 2.2 | E | E | 0.006 | 122 | Inventive example of present invention |
| 14 | 3.0 | 150 | 1.17 | 79 | H | T | 0.79 | 23 | E | E | 0.006 | 75 | Inventive example of present invention |
| 15 | 1.0 | 100 | 1.67 | 253 | L | DD | 0.82 | 1.5 | E | E | 0.006 | 122 | Inventive example of present invention |
| 16 | 1.0 | 100 | 1.67 | 253 | M | GG | 0.82 | 1.5 | E | E | 0.006 | 64 | Inventive example of present invention |
| 17 | 0.4 | 80 | 2.50 | 431 | A | AA | 1.53 | 1.1 | E | E | 0.004 | 53 | Inventive example of present invention |
| 18 | 0.4 | 80 | 2.50 | 431 | A | BB | 1.53 | 1.2 | E | E | 0.006 | 64 | Inventive example of present invention |
| 19 | 1.0 | 150 | 2.50 | 253 | C | CC | 1.93 | 1.3 | E | E | 0.007 | 88 | Inventive example of present invention |
| 20 | 1.0 | 150 | 2.50 | 253 | C | EE | 1.93 | 1.3 | E | E | 0.008 | 115 | Inventive example of present invention |

| Weld metal number | Welding conditions | | | | Base metal | Welding material | FA | F2 | Weld hot cracking resistance | Polythionic acid SCC resistance | Naphthenic acid corrosion resistance | Age-toughness | Remarks |
|---|---|---|---|---|---|---|---|---|---|---|---|---|---|
| | Heat input (kJ/mm) | Interlayer temperature (°C) | Welding speed V (mm/sec) | Cooling rate CR (°C/sec) | | | | | | | | | |
| 21 | 1.0 | 150 | 2.50 | 253 | C | FF | 1.93 | 1.4 | E | E | 0.005 | 51 | Inventive example of present invention |
| 22 | 1.0 | 150 | 2.50 | 253 | E | HH | 1.93 | 1.4 | E | E | 0.007 | 87 | Inventive example of present invention |
| 23 | 1.2 | 100 | 1.67 | 218 | N | S | 0.93 | 1.9 | E | E | 0.007 | 55 | Inventive example of present invention |
| 24 | 1.2 | 100 | 1.67 | 218 | C | II | 0.93 | 1.5 | E | E | 0.006 | 35 | Inventive example of present invention |
| 25 | 1.2 | 100 | 1.67 | 218 | C | JJ | 0.93 | 1.6 | E | E | 0.007 | 65 | Inventive example of present invention |
| 26 | 1.5 | 150 | 1.67 | 175 | A | v | 1.08 | 1.5 | E | E | 0.012 | 134 | Comparative example |
| 27 | 1.5 | 150 | 1.67 | 175 | A | W | 1.08 | 1.5 | E | NA | 0.007 | 85 | Comparative example |
| 28 | 1.5 | 150 | 1.67 | 175 | B | W | 1.08 | 1.3 | E | NA | 0.008 | 75 | Comparative example |
| 29 | 1.5 | 150 | 1.67 | 175 | C | X | 1.08 | 1.4 | E | E | 0.002 | 6 | Comparative example |
| 30 | 1.5 | 150 | 1.67 | 175 | D | Y | 1.08 | 1.4 | E | E | 0.006 | 17 | Comparative example |
| 31 | 2.0 | 150 | 1.67 | 119 | E | V | 1.27 | 1.8 | E | E | 0.013 | 135 | Comparative example |
| 32 | 2.0 | 150 | 1.67 | 119 | E | X | 1.27 | - | NA | - | - | - | Comparative example |

EP 4 534 714 A1

| Weld metal number | Welding conditions | | | | Base metal | Welding material | FA | F2 | Weld hot cracking resistance | Polythionic acid SCC resistance | Naphthenic acid corrosion resistance | Age-toughness | Remarks |
|---|---|---|---|---|---|---|---|---|---|---|---|---|---|
| | Heat input (kJ/mm) | Interlayer temperature (°C) | Welding speed V (mm/sec) | Cooling rate CR (°C/sec) | | | | | | | | | |
| 33 | 2.0 | 150 | 1.33 | 119 | F | Y | 0.84 | 1.9 | E | E | 0.007 | 18 | Comparative example |
| 34 | 2.0 | 150 | 1.33 | 119 | G | Z | 0.84 | - | NA | - | - | - | Comparative example |
| 35 | 4.5 | 150 | 0.83 | 49 | H | U | 0.50 | 2.7 | E | E | 0.011 | 17 | Comparative example |
| 36 | 2.5 | 250 | 0.83 | 55 | I | U | 0.46 | 2.6 | E | NA | 0.011 | 16 | Comparative example |
| 37 | 1.5 | 150 | 1.67 | 175 | J | U | 1.08 | - | NA | - | - | - | Comparative example |
| 38 | 1.5 | 150 | 1.67 | 175 | K | T | 1.08 | 1.8 | E | E | 0.012 | 118 | Comparative example |
| 39 | 2.0 | 150 | 1.67 | 119 | E | FF | 1.27 | - | NA | - | - | - | Comparative example |
| 40 | 2.0 | 150 | 1.67 | 119 | H | BB | 1.27 | - | NA | - | - | - | Comparative example |
| 41 | 3.5 | 250 | 0.75 | 71 | C | U | 0.22 | 2.7 | E | E | 0.011 | 12 | Comparative example |
| 42 | 4.0 | 150 | 0.83 | 58 | B | CC | 0.44 | 2.8 | E | E | 0.012 | 18 | Comparative example |
| 43 | 2.0 | 250 | 1.00 | 119 | G | HH | 0.34 | 2.7 | E | E | 0.011 | 9 | Comparative example |
| 44 | 2.8 | 150 | 0.92 | 75 | C | T | 0.46 | 2.6 | E | E | 0.011 | 18 | Comparative example |

[(Test 2) Weld hot cracking resistance evaluation test]

The weld hot cracking resistance of the austenitic stainless alloy welded joint of each weld metal number was evaluated by the following method. Ten test specimens for microstructure observation of a cross section perpendicular to the weld line were taken from a portion of the weld metal of the austenitic stainless alloy welded joint of each weld metal number. The size of each test specimen was set to 15 mm × 30 mm × 10 mm. Among the surfaces of each of the test specimens that were taken, a surface corresponding to a cross section perpendicular to the weld line was adopted as an "observation surface". The observation surface was 15 × 30 mm. The observation surface was mirror polished and then etched using a mixed acid. The surface of the etched test specimen was observed using an optical microscope with a magnification of 200×. Further, whether or not weld hot cracking had occurred within the weld metal of the observation surface was determined by visual observation. The evaluation results are shown in Table 4. If a crack was not confirmed in the weld metal of any of the 10 test specimens that were taken, it was determined that sufficient weld hot cracking resistance was obtained ("E (Excellent)" in Table 4). On the other hand, if a crack was confirmed in even one of the 10 test specimens, it was determined that sufficient weld hot cracking resistance was not obtained ("NA (Not Accepted)" in Table 4). Note that, for those test numbers for which "NA" was determined as the result of the weld hot cracking resistance evaluation test, the tests from Test 3 onward were not conducted.

[(Test 3) Polythionic acid SCC resistance evaluation test]

The polythionic acid SCC resistance of the weld metal of the austenitic stainless alloy welded joint of each weld metal number was evaluated by the following method.

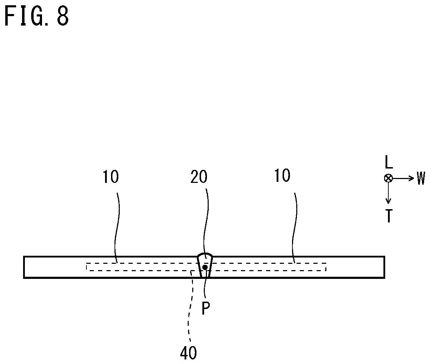

First, assuming usage under a high-temperature environment, the austenitic stainless alloy welded joint of each weld metal number was subjected to an aging treatment at 650°C for 3000 hours. A plate-shaped test specimen 40 having a thickness of 2 mm, a width of 10 mm, and a length of 75 mm that included the region P as illustrated in FIG. 8 was fabricated from each austenitic stainless alloy welded joint after the aging treatment. The thickness of 2 mm of the plate-shaped test specimen 40 corresponded to the length in the weld metal thickness direction T, the length of 75 mm of the plate-shaped test specimen 40 corresponded to the length in the weld metal width direction W, and the width of 10 mm of the plate-shaped test specimen 40 corresponded to the length in the weld metal extending direction L. Each plate-shaped test specimen 40 was fabricated in a manner so that the region P of the weld metal 20 was located at the center position of the length of 75 mm of the plate-shaped test specimen 40.

A polythionic acid SCC resistance evaluation test was performed in accordance with "Stress corrosion cracking test for stainless steels" in JIS G 0576: 2001. Specifically, each plate-shaped test specimen was bent around a punch having an inside radius of 5 mm to form a U-bend shape (the curved portion corresponded to the weld metal). The plate-shaped test specimen with the U-bend shape was then immersed in Wackenroder solution (a solution prepared by blowing a large amount of $H_2S$ gas into a $H_2SO_3$ saturated aqueous solution made by blowing $SO_2$ gas into distilled water) at normal temperature for 100 hours. After the immersion, the plate-shaped test specimen was subjected to microscopic observation at a magnification of 500× to check for the presence of a crack in the weld metal portion of the plate-shaped test specimen, and whether or not a crack was present was confirmed. The evaluation results are shown in Table 4. If a crack was not confirmed in the weld metal portion of the test specimen, it was determined that sufficient polythionic acid SCC resistance was obtained in the weld metal ("E" in Table 4). On the other hand, if a crack was confirmed in the weld metal portion of the test specimen, it was determined that sufficient polythionic acid SCC resistance was not obtained ("NA" in Table 4).

[(Test 4) Naphthenic acid corrosion resistance evaluation test]

The naphthenic acid corrosion resistance of the weld metal of the austenitic stainless alloy welded joint of each weld metal number was evaluated by the following method. First, a weld metal test specimen including the region P was taken from the austenitic stainless alloy welded joint of each weld metal number. Specifically, similarly to the plate-shaped test specimen 40 illustrated in FIG. 8, a test specimen having a thickness of 3 mm, a width of 10 mm, and a length of 30 mm and which included the region P was fabricated. The thickness of 3 mm of the test specimen corresponded to the length in the weld metal thickness direction T, the length of 30 mm of the test specimen corresponded to the length in the weld metal width direction W, and the width of 10 mm of the test specimen corresponded to the length in the weld metal extending direction L. The test specimen was fabricated in a manner so that the region P was the center portion in the longitudinal direction and also the center portion in the thickness direction of the test specimen.

Each fabricated test specimen was immersed in a 100% cyclohexanecarboxylic acid solution (test solution) at 200°C for 720 hours under normal pressure. After 720 hours elapsed, the test specimen was taken out.

After being taken out after 720 hours elapsed, each test specimen was ultrasonically cleaned using acetone for 3 minutes.

The difference between the mass of the test specimen before the test and the mass of the test specimen after ultrasonic cleaning was calculated as the corrosion loss. In addition, the corrosion rate (mm/y) was determined based on the surface area and specific gravity of the test specimen, and the test time. The evaluation results are shown in Table 4. If the corrosion rate was 0.010 mm/y or less, it was determined that sufficient naphthenic acid corrosion resistance was obtained in the weld metal. On the other hand, if the corrosion rate was more than 0.010 mm/y, it was determined that sufficient naphthenic acid corrosion resistance was not obtained.

[(Test 5) Age-toughness evaluation test]

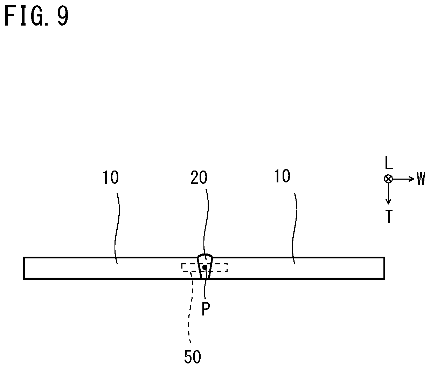

The age-toughness of the weld metal of the austenitic stainless alloy welded joint of each weld metal number was evaluated by the following method. First, a V-notch test specimen 50 including the region P was fabricated from the position illustrated in FIG. 9 of the austenitic stainless alloy welded joint of each weld metal number. The width of the test specimen 50 was made 10 mm, the thickness was made 10 mm, and the length was made 55 mm. The thickness of 10 mm of the test specimen corresponded to the length in the weld metal thickness direction T, the width of 10 mm of the test specimen corresponded to the length in the weld metal width direction W, and the length of 55 mm of the test specimen corresponded to the length in the weld metal extending direction L. The test specimen 50 was fabricated in a manner so that the region P of the weld metal 20 was located at the width-center position of the test specimen 50. A V-notch was formed at a position at the center of the length of the test specimen 50. The V-notch angle was made 45°, the notch depth was made 2 mm, and the radius of the bottom of the notch was made 0.25 mm. Three of the V-notch test specimens 50 were fabricated.

The test specimens 50 were subjected to an aging treatment in which each test specimen 50 was held at 650°C for 1000 hours. After being held for 1000 hours, the test specimens were allowed to cool to normal temperature. The test specimens after the aging treatment were subjected to a Charpy impact test in accordance with JIS Z 2242: 2005 at normal temperature in an air atmosphere. The arithmetic average value of the three values of impact energy ($J/cm^2$) obtained by the test was defined as the value of impact energy ($J/cm^2$) after high-temperature aging treatment of the relevant test number. The evaluation results are shown in Table 4. If the obtained value of impact energy was 20 $J/cm^2$ or more, it was determined that sufficient age-toughness was obtained in the weld metal. On the other hand, if the obtained value of impact energy was less than 20 $J/cm^2$, it was determined that sufficient age-toughness was not obtained in the weld metal.

[Test results]

Referring to Table 1-1, Table 1-2, Table 2-1, Table 2-2, Table 3-1, Table 3-2, and Table 4, in Test Nos. 1 to 25, the chemical compositions of the base metal, the welding material, and the weld metal were appropriate, and the production conditions were also appropriate. Therefore, the austenitic stainless alloy welded joints of these test numbers satisfied Feature 1 to Feature 4. Therefore, in these test numbers, sufficient weld hot cracking resistance, sufficient polythionic acid SCC resistance, sufficient naphthenic acid corrosion resistance, and sufficient age-toughness were obtained.

On the other hand, in Test Nos. 26 and 31, the content of Mo of the welding material was too low. Consequently, the content of Mo of the weld metal was too low. Therefore, sufficient naphthenic acid corrosion resistance was not obtained.

In Test Nos. 27 and 28, the content of C of the welding material was too high. Consequently, the content of C of the weld metal was too high. Therefore, sufficient polythionic acid SCC resistance was not obtained.

In Test Nos. 29 and 32, the content of Mo of the welding material was too high. Consequently, the content of Mo of the weld metal was too high. Therefore, in Test No. 29, sufficient age-toughness was not obtained. In Test No. 32, in addition, F1 was more than 2.30. Therefore, sufficient weld hot cracking resistance was not obtained.

In Test Nos. 30 and 33, the content of Ni of the welding material was too low. Consequently, the content of Ni of the weld metal was too low. Therefore, sufficient age-toughness was not obtained.

In Test No. 34, the content of B of the welding material was too high. Consequently, the content of B of the weld metal was too high. Therefore, sufficient weld hot cracking resistance was not obtained.

In Test No. 35, although the chemical compositions of the base metal and the welding material were appropriate, the heat input among the welding conditions was too high. Therefore, F2 was more than 2.5. As a result, sufficient naphthenic acid corrosion resistance and sufficient age-toughness were not obtained.

In Test No. 36, the content of C of the base metal was too high. Consequently, the content of C of the weld metal was too high. In addition, the interlayer temperature was more than 150°C. Consequently, F2 was more than 2.5. Therefore, sufficient polythionic acid SCC resistance, sufficient naphthenic acid corrosion resistance, and sufficient age-toughness were not obtained.

In Test No. 37, the content of B of the base metal was too high. Consequently, the content of B of the weld metal was too high. Therefore, sufficient weld hot cracking resistance was not obtained.

In Test No. 38, the content of Mo of the base metal was too low. Consequently, the content of Mo of the weld metal was too low. Therefore, sufficient naphthenic acid corrosion resistance was not obtained.

**EP 4 534 714 A1**

In Test Nos. 39 and 40, although the chemical compositions of the base metal and the weld metal were appropriate, F1 was more than 2.30. Therefore, sufficient weld hot cracking resistance was not obtained.

In Test No. 41, although the chemical compositions of the base metal and the welding material were appropriate, the heat input and the interlayer temperature were each high. Therefore, F2 was more than 2.5. As a result, sufficient naphthenic acid corrosion resistance and sufficient age-toughness were not obtained.

In Test No. 42, although the chemical compositions of the base metal and the welding material were appropriate, the heat input was too high. Therefore, F2 was more than 2.5. As a result, sufficient naphthenic acid corrosion resistance and sufficient age-toughness were not obtained.

In Test No. 43, although the chemical compositions of the base metal and the welding material were appropriate, the interlayer temperature was too high. Therefore, F2 was more than 2.5. As a result, sufficient naphthenic acid corrosion resistance and sufficient age-toughness were not obtained.

In Test No. 44, although the chemical compositions of the base metal and the welding material were appropriate, FA was 0.60 or less. Therefore, F2 was more than 2.5. As a result, sufficient naphthenic acid corrosion resistance and sufficient age-toughness were not obtained.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range that does not depart from the gist of the present disclosure.

REFERENCE SIGNS LIST

1    austenitic stainless alloy welded joint
10   base metal
20   weld metal

**Claims**

1.  An austenitic stainless alloy welded joint, comprising:

    a base metal and a weld metal,
    wherein:

        a chemical composition of the base metal consists of, in mass%,
        C: 0.030% or less,
        Si: 0.10 to 1.00%,
        Mn: 0.20 to 2.00%,
        P: 0.040% or less,
        S: 0.010% or less,
        Cr: 16.0 to 25.0%,
        Ni: 10.0 to 30.0%,
        Mo: 0.1 to 5.0%,
        Nb: 0.20 to 1.00%,
        N: 0.05 to 0.30%,
        sol. Al: 0.001 to 0.100%,
        B: 0 to 0.0080%,
        Cu: 0 to 5.00%,
        W: 0 to 5.00%,
        Co: 0 to 1.00%,
        V: 0 to 1.00%,
        Ta: 0 to 0.20%,
        Hf: 0 to 0.20%,
        Ca: 0 to 0.010%,
        Mg: 0 to 0.010%, and
        rare earth metal: 0 to 0.100%,
        with the balance being Fe and impurities;
        a chemical composition of the weld metal consists of, in mass%,

C: 0.020% or less,
Si: 0.01 to 1.00%,
Mn: 0.20 to 2.00%,
P: 0.030% or less,
S: 0.010% or less,
Cr: 16.0 to 25.0%,
Ni: 15.0 to 40.0%,
Mo: 2.5 to 5.0%,
Nb: 0.10 to 2.00%,
N: 0.05 to 0.30%,
sol. Al: 0.001 to 0.100%,
B: 0.0010 to 0.0050%,
Cu: 0 to 5.00%,
W: 0 to 5.00%,
Co: 0 to 1.00%,
V: 0 to 1.00%,
Ta: 0 to 0.20%,
Hf: 0 to 0.20%,
Ca: 0 to 0.010%,
Mg: 0 to 0.010%, and
rare earth metal: 0 to 0.100%,
with the balance being Fe and impurities, and with F1 defined by Formula (1) being 2.30 or less; and when, in a cross section of the weld metal that is perpendicular to a weld metal extending direction, a square region of 1 mm $\times$ 1 mm that is a width center portion at a surface of the weld metal and is a thickness center portion of the weld metal is partitioned into minute square sections of 100 $\mu$m $\times$ 100 $\mu$m and a content of Mo in percent by mass in each minute square section is determined, and an arithmetic average value of all of the contents of Mo obtained is defined as $[Mo]_{AVE}$, an arithmetic average value of contents of Mo that are higher than $[Mo]_{AVE}$ among all of the contents of Mo obtained is defined as $[Mo]_H$, and an arithmetic average value of contents of Mo that are lower than $[Mo]_{AVE}$ among all of the contents of Mo obtained is defined as $[Mo]_L$, F2 defined by Formula (2) is 2.5 or less;

$$F1 = 130B + 8C + 0.025Cr + 0.25Mn + 0.08Mo + 0.6Nb + 12P + 7.6S + 0.78Si + 0.012W \tag{1}$$

$$F2 = [Mo]_H/[Mo]_L \tag{2}$$

where, a content of a corresponding element in percent by mass in the weld metal is substituted for each symbol of an element in Formula (1).

2. The austenitic stainless alloy welded joint according to claim 1, wherein the chemical composition of the base metal contains one element or more selected from a group consisting of:

B: 0.0001 to 0.0080%,
Cu: 0.01 to 5.00%,
W: 0.01 to 5.00%,
Co: 0.01 to 1.00%,
V: 0.01 to 1.00%,
Ta: 0.01 to 0.20%,
Hf: 0.01 to 0.20%,
Ca: 0.001 to 0.010%,
Mg: 0.001 to 0.010%, and
rare earth metal: 0.001 to 0.100%.

3. The austenitic stainless alloy welded joint according to claim 1 or claim 2, wherein the chemical composition of the weld metal contains one element or more selected from a group consisting of:

Cu: 0.01 to 5.00%,

W: 0.01 to 5.00%,
Co: 0.01 to 1.00%,
V: 0.01 to 1.00%,
Ta: 0.01 to 0.20%,
Hf: 0.01 to 0.20%,
Ca: 0.001 to 0.010%,
Mg: 0.001 to 0.010%, and
rare earth metal: 0 to 0.100%.

4.  An austenitic stainless alloy welding material, having a chemical composition consisting of, in mass%,

C: 0.020% or less,
Si: 0.01 to 1.00%,
Mn: 0.20 to 2.00%,
P: 0.030% or less,
S: 0.010% or less,
Cr: 16.0 to 25.0%,
Ni: 15.0 to 40.0%,
Mo: 2.5 to 5.0%,
Nb: 0.10 to 2.00%,
N: 0.05 to 0.30%,
sol. Al: 0.001 to 0.100%,
B: 0.0010 to 0.0050%,
Cu: 0 to 5.00%,
W: 0 to 5.00%,
Co: 0 to 1.00%,
V: 0 to 1.00%,
Ta: 0 to 0.20%,
Hf: 0 to 0.20%,
Ca: 0 to 0.010%,
Mg: 0 to 0.010%, and
rare earth metal: 0 to 0.100%,
with the balance being Fe and impurities.

FIG. 1

1

L
⊗ → W
T

10    20    10

FIG. 2

10    20    10

FIG. 3

10

FIG. 4

10

EP 4 534 714 A1

FIG. 5

41

FIG. 6

FIG. 7

FIG. 8

10        20        10

L
W
T

P

40

FIG. 9

<div align="center">

**INTERNATIONAL SEARCH REPORT**

</div>

| | International application No. |
|---|---|
| | **PCT/JP2023/019346** |

**A. CLASSIFICATION OF SUBJECT MATTER**

*C22C 38/00*(2006.01)i; *B23K 35/30*(2006.01)i; *C22C 38/58*(2006.01)i
FI: C22C38/00 302Z; B23K35/30 320B; C22C38/58

According to International Patent Classification (IPC) or to both national classification and IPC

**B. FIELDS SEARCHED**

Minimum documentation searched (classification system followed by classification symbols)

C22C38/00; B23K35/30; C22C38/58

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/168119 A1 (NIPPON STEEL CORP.) 06 September 2019 (2019-09-06) entire text, all drawings | 1-4 |
| A | WO 2021/141107 A1 (NIPPON STEEL CORP.) 15 July 2021 (2021-07-15) entire text | 1-4 |
| A | WO 2021/015283 A1 (NIPPON STEEL CORP.) 28 January 2021 (2021-01-28) entire text, all drawings | 1-4 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 July 2023** | **25 July 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/019346**

| Patent document cited in search report | | | Publication date (day/month/year) | Patent family member(s) | | | Publication date (day/month/year) |
|---|---|---|---|---|---|---|---|
| WO | 2019/168119 | A1 | 06 September 2019 | US | 2020/0392611 | A1 | |
| | | | | entire text, all drawings | | | |
| | | | | EP | 3760753 | A1 | |
| | | | | CN | 111771007 | A | |
| | | | | KR | 10-2020-0124279 | A | |
| WO | 2021/141107 | A1 | 15 July 2021 | US | 2022/0411908 | A1 | |
| | | | | entire text | | | |
| | | | | EP | 4089195 | A1 | |
| | | | | CN | 114929917 | A | |
| | | | | KR | 10-2022-0124238 | A | |
| WO | 2021/015283 | A1 | 28 January 2021 | US | 2022/0259688 | A1 | |
| | | | | entire text, all drawings | | | |
| | | | | EP | 4006179 | A1 | |
| | | | | CN | 114144537 | A | |
| | | | | KR | 10-2022-0036969 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003166039 A
- WO 2009044802 A